# EUROPEAN PATENT APPLICATION

(11) **EP 2 809 099 A1**
(43) Date of publication of application: **03.12.2014**
(21) Application number: 12866932.2
(22) Date of filing: 26.01.2012
(51) Int. Cl.: H04W 24/04

(54) **COMMUNICATION METHOD, COMMUNICATION TERMINAL AND BASE STATION APPARATUS**

(71) Applicant: Fujitsu Limited, Kawasaki-shi, Kanagawa 211-8588 (JP)
(72) Inventor: YOKOYAMA, Hitoshi, Kawasaki-shi Kanagawa 211-8588 (JP)
(74) Representative: Lewin, David Nicholas
(86) International application number: PCT/JP2012/051702
(87) International publication number: WO 2013/111309

(57) **Abstract**

In a communication method according to an embodiment, a communication apparatus included in a wired network in which a terminal performs communication via a base station specifies a position of a coverage hole which is a region where a terminal does not receive a radio wave with an intensity which allows communication to be performed. Next, a hole proximity terminal which has a possibility of coming close to the coverage hole is determined. In addition, a notification message for notifying hole information to specify a position of the coverage hole is transmitted to the hole proximity terminal.

## Description

### FIELD

The present invention relates to communication which is performed by a communication terminal via a base station apparatus.

### BACKGROUND

When a mobile phone system is changed, or a system which has been destroyed due to natural disasters is recovered, a new base station is installed. In this case, a coverage hole may occur which is a region where a mobile phone and the base station cannot communicate with each other until installation of the base station is completed. Therefore, minimization of drive test (MDT) is currently being developed in order to remove a coverage hole. In a system using the MDT, a coverage hole is specified, and an adjustment or the like of an antenna is performed in order to remove the specified coverage hole.

As a technique related to detection of a region where it is hard to perform communication, a system has been designed which can distinguish a radio link failure location at the time of handover. In this system, in a case where line disconnection occurs in a first cell, and a mobile terminal is connected to a second cell again within a predefined time from the time when the line disconnection occurs, or within a movement distance, the mobile terminal reports at least one of information on the first cell and information on the second cell to a base station.

### [Documents of Related Arts]

### [Patent Documents]

[Patent Document 1] International Publication Pamphlet No. WO 2009/060935

### Summary of Invention

### Technical Problem

Even if the adjustment of an antenna or the like is performed in order to remove the specified coverage hole, the coverage hole is not removed in a case where the number of base stations to be installed is not sufficient during maintenance of the system.

An object of the invention is to provide a system in which a user can easily avoid a coverage hole so that communication is performed.

### Solution to Problem

In a communication method according to an embodiment, a communication apparatus included in a wired network in which the terminal performs communication via a base station specifies a position of a coverage hole which is a region where a terminal does not receive a radio wave with an intensity which allows communication to be performed. Next, a hole proximity terminal which has a possibility of coming close to the coverage hole is determined. In addition, a notification message for notifying hole information which is information to specify a position of the coverage hole is transmitted to the hole proximity terminal.

### Advantageous Effects of Invention

A user can easily avoid a coverage hole on the basis of hole information received by a terminal so that communication can be performed.

### BRIEF DESCRIPTION OF DRAWINGS

Fig. 1 is a diagram illustrating an example of a communication method according to an embodiment.
Fig. 2 is a diagram illustrating configuration examples of apparatuses which operate in a first embodiment.
Fig. 3 is a diagram illustrating an example of a hole information database.
Fig. 4 is a diagram illustrating an example of a positional information database.
Fig. 5 is a diagram illustrating hardware configuration examples of the apparatuses.
Fig. 6 is a diagram illustrating an example of a positional relationship between a coverage hole and terminal apparatuses.
Fig. 7 is a diagram illustrating an example of a message format.
Fig. 8 is a sequence diagram illustrating an example of a process performed after it is determined that a coverage hole cannot be improved.
Fig. 9 is a diagram illustrating examples of a calculation result in a calculation unit and a determination result of whether or not a warning is issued.
Fig. 10 is a flowchart illustrating an example of an operation of a terminal apparatus which has received a hole notification.
Fig. 11 is a diagram illustrating a configuration example of apparatuses which operate in a second embodiment.
Fig. 12 is a sequence diagram illustrating an example of a process performed after it is determined that a coverage hole cannot be improved in the second embodiment.
Fig. 13 is a diagram illustrating an example of a message format.
Fig. 14 is a flowchart illustrating an example of a process in a base station when a notification of a position of a coverage hole has been sent.
Fig. 15 is a flowchart illustrating an example of an operation of a terminal apparatus which has benn notified of a position of a coverage hole.
Fig. 16 is a diagram illustrating a configuration example of apparatuses which operate in a third embodiment.
Fig. 17 is a diagram illustrating an example of a message format.
Fig. 18 is a sequence diagram illustrating an example of a process performed after it is determined that a coverage hole cannot be reduced in the third embodiment.
Fig. 19 is a flowchart illustrating an example of a process in an MME when a notification of a position of a coverage hole has been sent.
Fig. 20 is a flowchart illustrating an example of an operation of a terminal apparatus which has been notified of a position of a coverage hole.
Fig. 21 is a diagram illustrating an example of a system according to a fourth embodiment.
Fig. 22 is a diagram illustrating a configuration example of an application server.
Fig. 23 is a sequence diagram illustrating an example of a process performed after it is determined that a coverage hole cannot be reduced in the fourth embodiment.
Fig. 24 is a diagram illustrating an example of a notification message format.
Fig. 25 is a flowchart illustrating an example of an operation of a terminal apparatus which has been notified of a position of a coverage hole.

### DESCRIPTION OF EMBODIMENTS

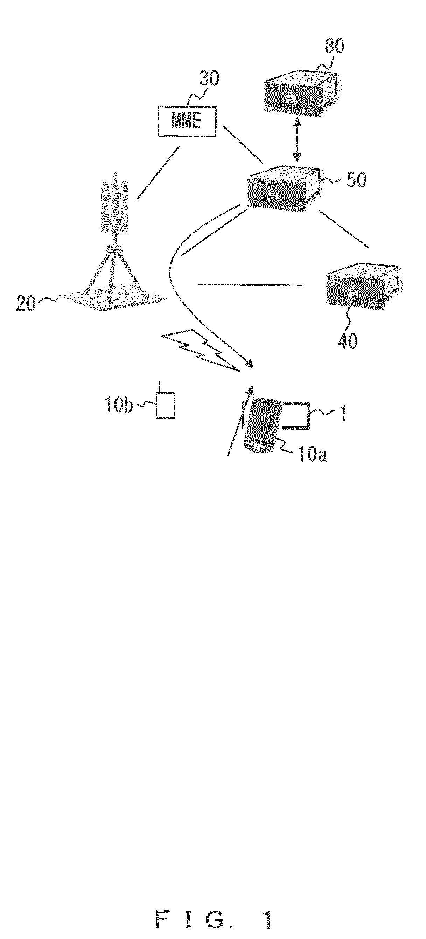

Fig. 1 illustrates an example of a communication method according to an embodiment. Fig. 1 illustrates an example of a long term evolution (LTE) network. It is assumed that terminal apparatuses 10a and 10b communicate with an apparatus which is a communication destination via a base station 20. The base station 20 is connected to a wired network, and the wired network includes mobility management equipment (MME) 30, an element manager (EM) 40, an MDT management server 50, and a positional information server 80.

It is assumed that the terminal apparatus 10a is a terminal of a user A, and the terminal apparatus 10b is a terminal of a user B. It is assumed that a position of the terminal apparatus 10a is changed according to a movement of the user A, and a position of the terminal apparatus 10b is changed according to a movement of the user B. It is assumed that each terminal apparatus 10 notifies the positional information server 80 of the present position, and the positional information server 80 holds positional information of the terminal apparatus 10 in correlation with an identifier of the terminal apparatus 10. In addition, in this example, it is assumed that the user A moves in and around a coverage hole 1 or through the coverage hole 1, and thus the terminal apparatus 10a enters the coverage hole 1 multiple times.

First, the terminal apparatus 10a is assumed to cross the coverage hole 1 according to a movement of the user A. The terminal apparatus 10a cannot communicate with the base station 20 if the terminal apparatus enters the coverage hole 1, but restarts communication with the base station 20 if the terminal apparatus leaves the coverage hole 1. In addition, the terminal apparatus 10a transmits a notification including information for specifying a position where communication is suspended, to the MDT management server 50. In the following description, the notification including information for specifying a position where communication is suspended is referred to as a radio link failure (RLF) notification in some cases. Here, the RLF notification indicates a position where communication between the terminal apparatus 10 and the base station 20 is suspended, and thus can be said to be information indicating a position of the coverage hole 1. The RLF notification is received by the MDT management server 50 via the base station 20 and the EM 40.

The MDT management server 50 specifies a position of the coverage hole 1 from the information included in the RLF notification, and calculates a parameter which is used for setting of an antenna of the base station 20 in order to reduce the coverage hole 1. The MDT management server 50 notifies the base station 20 of the calculated parameter. The base station 20 adjusts the antenna by using the parameter of which a notification has been sent from the MDT management server 50.

At this time, it is assumed that, although the antenna is adjusted, the coverage hole 1 is not removed, and the terminal apparatus 10a enters the coverage hole 1 again. Then, as described above, the terminal apparatus 10a transmits the RLF notification to the MDT management server 50 via the base station 20 when communication with the base station 20 is restarted.

If the RLF notification for the coverage hole 1 for which the parameter in the base station 20 has been changed is received again, the MDT management server 50 determines that the coverage hole 1 cannot be reduced. In addition, it is assumed that the number of times of changing parameters in the base station 20 before determining whether or not the coverage hole 1 can be reduced is arbitrary in accordance with implementations

If the MDT management server 50 detects the coverage hole 1 which cannot be reduced, the MDT management server 50 notifies the terminal apparatus 10 located around the coverage hole 1 of the position of the coverage hole 1. At this time, the MDT management server 50 inquires the positional information server 80 about the terminal apparatus 10 located around the coverage hole 1. The positional information server 80 determines that the terminal apparatus 10 whose distance from the coverage hole 1 is smaller than a first threshold value is located around the coverage hole 1. Here, it is assumed that the MDT management server 50 is notified of the terminal apparatus 10a and the terminal apparatus 10b as terminal apparatuses located around the coverage hole 1. In the following description, a terminal apparatus located around the coverage hole 1 is referred to as a "hole proximity terminal" in some cases. The MDT management server 50 notifies the terminal apparatus 10a and the terminal apparatus 10b of the position of the coverage hole 1.

When a notification of the position of the coverage hole 1 is sent from the MDT management server 50, the terminal apparatus 10b stores the position of the coverage hole 1, and periodically obtains a distance between a position of the terminal apparatus 10b and the position of the coverage hole 1. If a distance between the terminal apparatus 10b and the coverage hole 1 becomes equal to or smaller than a second threshold value, the terminal apparatus 10b outputs warning information in a method in which the user B can recognize the warning information. For example, the terminal apparatus 10b may display information for notifying of being close to the coverage hole 1 on a display. The terminal apparatus 10a is also operated in the same manner as the terminal apparatus 10b.

In addition, a notification of a position of the coverage hole 1 may be performed by the base station or the MME 30. In this case, the base station may notify the terminal apparatus 10 connected to the base station of a position of the coverage hole 1. Likewise, the MME 30 may notify the terminal apparatus 10 connected to the MME 30 of a position of the coverage hole 1.

As mentioned above, if the method according to the embodiment is employed, since a warning is issued to a user of the terminal apparatus 10 when the terminal apparatus 10 comes close to the coverage hole 1 which is determined as being incapable of being improved, the user easily avoid the coverage hole so that communication can be performed.

### <First Embodiment>

In the following description, for better differentiation between the first threshold value and the second threshold value, the first threshold value is referred to as an "observation area threshold value" and the second threshold value is referred to as a "warning area threshold value" in some cases. The threshold values are assumed to be stored in the MDT management server 50 in advance.

### [Apparatus Configuration]

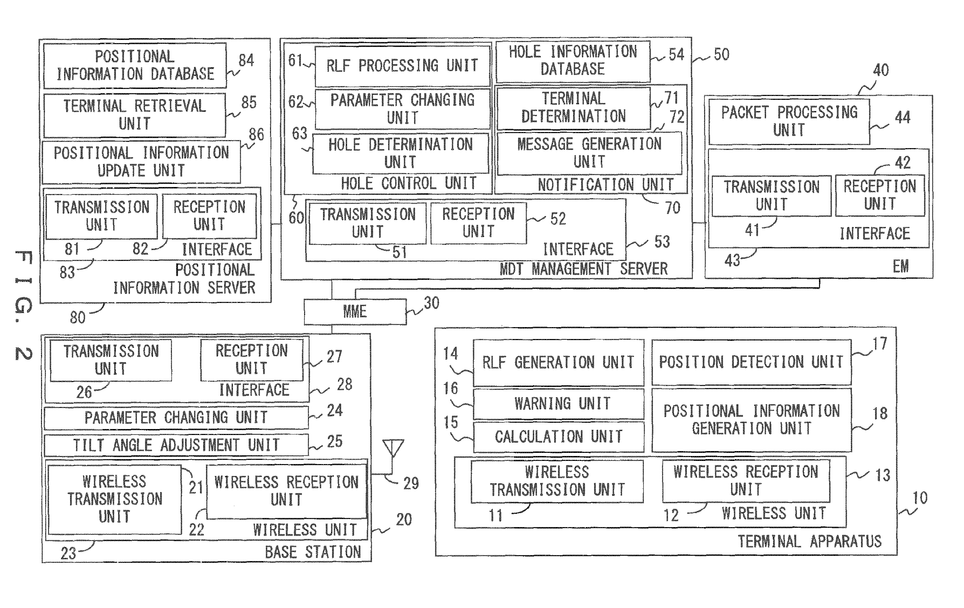

Fig. 2 illustrates configuration examples of apparatuses which operate in the first embodiment. The terminal apparatus 10 includes a wireless unit 13, an RLF generation unit 14, a calculation unit 15, a warning unit 16, a position detection unit 17, and a positional information generation unit 18. In addition, the wireless unit 13 includes a wireless transmission unit 11, and a wireless reception unit 12. The wireless transmission unit 11 and the wireless reception unit 12 perform wireless communication with the base station 20. The RLF generation unit 14 generates an RLF notification including a position where communication between the terminal apparatus 10 and the base station 20 fails and an identifier for identifying the base station 20 which has performed the communication before the communication is suspended. The RLF notification generated by the RLF generation unit 14 is transmitted from the wireless transmission unit 11 toward the base station 20, and is transmitted from the base station 20 to the MDT management server 50.

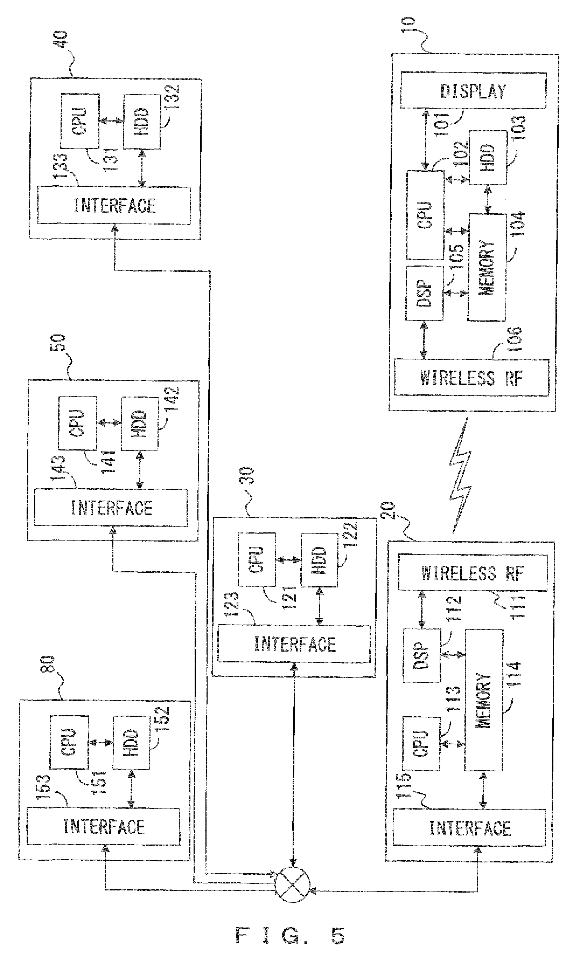

If the terminal apparatus 10 is notified of a position of the coverage hole 1, the calculation unit 15 stores information thereon. In addition, the calculation unit 15 calculates a distance between the coverage hole 1 and the terminal apparatus 10, and outputs a calculation result to the warning unit 16. The warning unit 16 holds the warning area threshold value second threshold value) of which the terminal apparatus 10 has been notified. The warning unit 16 issues a warning in a method in which a user of the terminal apparatus 10 can recognize the warning if a value calculated by the calculation unit 15 is equal to or smaller than the warning area threshold value, so as to attract the user's attention. For example, the warning unit 16 may generate an alarm sound from a speaker (not illustrated) provided in the terminal apparatus 10. Further, a position of the coverage hole 1 whose distance from the terminal apparatus 10 is equal to or smaller than the warning area threshold value and the present position of the terminal apparatus 10 may be displayed on a display (a display 101 of Fig. 5) of the terminal apparatus 10.

The position detection unit 17 detects the present location of the terminal apparatus 10. For example, the position detection unit 17 may detect a position of the terminal apparatus 10 by using a GPS. In addition, the position detection unit 17 may acquire positional information by using an assisted global navigation satellite system (A-SMSS) or observed time difference of arrival (OTDOA). The position detection unit 17 outputs information for specifying the detected position to the calculation unit 15 and the positional information generation unit 18. The positional information generation unit 18 generates a notification (positional information notification) including the information acquired from the position detection unit 17. The positional information generation unit 18 transmits the positional information notification to the positional information server 80 via the wireless transmission unit 11.

The base station 20 includes a wireless unit 23, a parameter acquisition unit 24, a tilt angle adjustment unit 25, an interface 28, and an antenna 29. A communication area of the base station 20 is formed by radio waves from the antenna 29. The wireless unit 23 includes a wireless transmission unit 21 and a wireless reception unit 22, and performs wireless communication with the terminal apparatus 10 located within the communication area of the base station 20. The interface 28 is provided with a transmission unit 26 and a reception unit 27. The interface 28 performs communication with the MME 30, the EM 40, the MDT management server 50, the positional information server 80, and the like via links. When a message including a parameter used to adjust the antenna 29 is received from the MDT management server 50, the parameter acquisition unit 24 extracts the parameter therefrom. The parameter acquisition unit 24 outputs the obtained parameter to the tilt angle adjustment unit 25. The tilt angle adjustment unit 25 adjusts a tilt angle of the antenna 29. The tilt angle adjustment unit 25 may use the parameter which is input from the parameter acquisition unit 24, when a tilt angle is adjusted.

The MME 30 is connected to one or more base stations 20. The MME 30 is a control apparatus which controls the connected base station 20. The MME 30 is assumed to store an identifier of the connected base station 20.

The EM 40 includes an interface 43 and a packet processing unit 44. The interface 43 is provided with a transmission unit 41 and a reception unit 42, and performs communication with the MME 30, the MDT management server 50, the base station 20, and the like. The EM 40 stores connection states (network information) of the base station 20, the MME 30, the MDT management server 50, and the positional information server 80. The packet processing unit 44 performs a transfer process of packets which are received from the MDT management server 50, the MME 30, and the base station 20, on the basis of the stored network information. In addition, the EM 40 sends a notification of the network information in response to an inquiry from the MDT management server 50. Further, the packet processing unit 44 processes a packet as appropriate which is sent to the EM 40.

The MDT management server 50 includes an interface 53, a hole information database 54, a hole control unit 60, and a notification unit 70. The hole control unit 60 includes an RLF processing unit 61, a parameter changing unit 62, and a hole determination unit 63. The notification unit 70 includes a terminal determination unit 71 and a message generation unit 72. The interface 53 is provided with a transmission unit 51 and a reception unit 52, and performs communication with the base station 20, the MME 30, and the positional information server 80 via links.

The RLF processing unit 61 acquires an RLF notification which is transmitted from the terminal apparatus 10, via the base station 20 and the reception unit 52. The RLF processing unit 61 grasps a position where communication between the terminal apparatus 10 and the base station 20 is suspended, from the RLF notification. The RLF processing unit 61 records the position whose notification has been sent by using the RLF notification, in the hole information database 54 as a position where the coverage hole 1 is present. In addition, the RLF processing unit 61 may count the number of notifications for each position whose notification has been sent by using the RLF notification, and may register the position whose notification has been sent by using the RLF notification in the hole information database 54 when the number of notifications is equal to or larger than a threshold value.

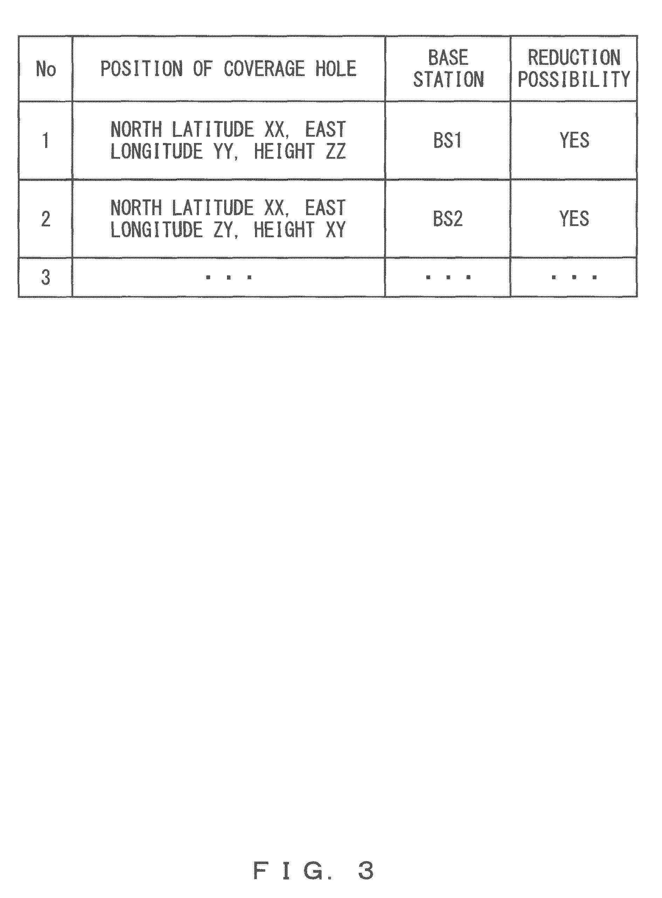

Fig. 3 illustrates an example of the hole information database 54. The hole information database 54 records a position of the coverage hole 1, an identifier for identifying the base station 20 of which communication with the terminal apparatus 10 is suspended, and a possibility that the coverage hole 1 can be reduced. The position of the coverage hole 1 is information for specifying latitude, longitude, and a height from the earth's surface of the coverage hole 1.

The coverage hole 1 may possibly be reduced or removed through an adjustment of setting of the antenna 29 of the base station 20 which includes the coverage hole 1 in a communication area thereof. In addition, the coverage hole 1 may also possibly be reduced or removed by adjusting the antenna 29 of the base station 20 of which the communication area is adjacent to the coverage hole 1. The base station 20 whose communication with the terminal apparatus 10 is suspended includes the coverage hole 1 in a communication area thereof or has a communication area adjacent to the coverage hole 1. Therefore, the RLF processing unit 61 records an identifier of the base station 20 whose notification has been sent by using an RLF notification in the hole information database 54 in correlation with the coverage hole 1. In addition, the RLF processing unit 61 sets a reduction possibility of a newly registered coverage hole 1 to "Yes".

The parameter changing unit 62 determines a parameter for changing setting of the antenna 29 of a base station which is correlated with a position of the coverage hole 1. Next, the parameter changing unit 62 generates a message for notifying the determined parameter, and transmits the message to the base station 20 via the transmission unit 51. Hereinafter, the parameter for changing setting of the antenna 29 is referred to as a "changing parameter" in some cases. In addition, the parameter changing unit 62 notifies the hole determination unit 63 that the message for notifying the changing parameter has been transmitted.

The hole determination unit 63 counts the number of times the message including the changing parameter is transmitted to the base station 20 whose communication area includes the coverage hole 1 or the base station 20 whose communication area is adjacent to the coverage hole 1 for each coverage hole 1. If another RLF notification is received in relation to the coverage hole 1 for which the number of times of transmission of a message including the changing parameter exceeds a threshold value, the hole determination unit 63 determines that the coverage hole 1 cannot be reduced. The hole determination unit 63 sets a reduction possibility of the hole information database 54 to "No" in relation to the coverage hole 1 which is determined as being incapable of being reduced. The hole determination unit 63 notifies the terminal determination unit 71 of the coverage hole 1 which has no reduction possibility.

The terminal determination unit 71 inquires the positional information server 80 about the terminal apparatus 10 whose distance from the coverage hole 1 which is determined as there being no reduction possibility is equal to or smaller than the observation area threshold value (first threshold value). The terminal determination unit 71 outputs an identifier of the terminal apparatus 10 whose notification has been sent from the positional information server 80, to the message generation unit 72 in correlation with the coverage hole 1. The message generation unit 72 generates a notification message for notifying a position of the coverage hole 1, setting a destination to each terminal apparatus 10 which has been input from the terminal determination unit 71. The message generation unit 72 transmits the generated notification message to the destination via the transmission unit 51.

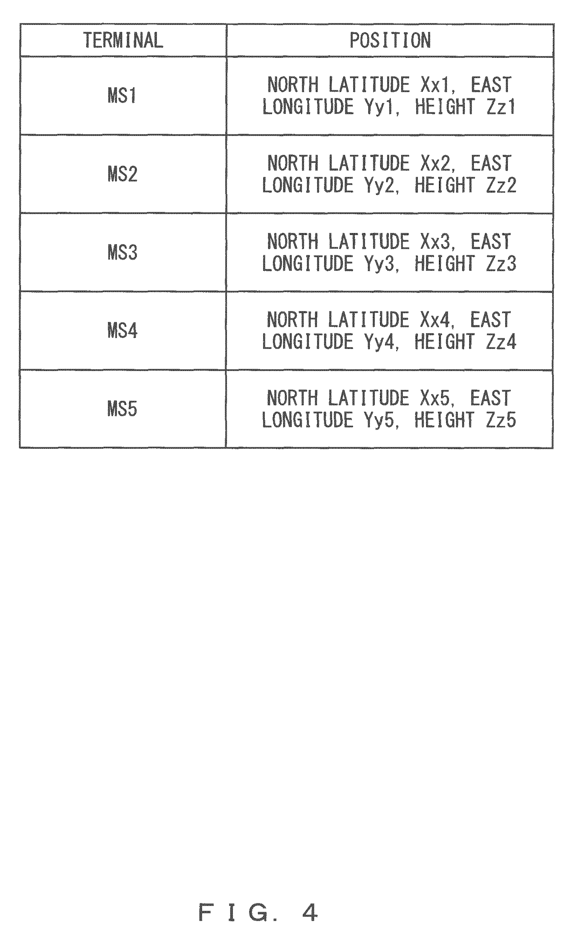

The positional information server 80 includes an interface 83, a positional information database 84, a terminal retrieval unit 85, and a positional information update unit 86. The interface 83 is provided with a transmission unit 81 and a reception unit 82, and performs communication with the MDT management server 50 and the like. When a positional information notification is received from the terminal apparatus 10, the positional information update unit 86 records a position of each terminal apparatus 10 in the positional information database 84 in correlation with an identifier of the terminal apparatus 10. Fig. 4 illustrates an example of the positional information database 84. The terminal retrieval unit 85 retrieves an identifier of the terminal apparatus 10 whose distance from the coverage hole 1 whose notification has been sent from the MDT management server 50 is equal to or smaller than the observation area threshold value, in response to an inquiry from the MDT management server 50. At this time, the terminal retrieval unit 85 uses the positional information database 84 as appropriate, and transmits a retrieval result to the MDT management server 50. When positional information is received from the terminal apparatus 10, the positional information update unit 86 updates the positional information database 84.

Fig. 5 is a diagram illustrating hardware configuration examples of the apparatuses. The terminal apparatus 10 includes the display 101, a central processing unit (CPU) 102, a hard disk drive (HDD) 103, a memory 104, a digital signal processor (DSP) 105, and a wireless radio frequency (RF) circuit 106. The wireless unit 13 is realized by the wireless RF circuit 106 and the DSP 105. The RLF generation unit 14, the calculation unit 15, the warning unit 16, the position detection unit 17, and the positional information generation unit 18 are realized by the CPU 102. In this case, the CPU 102 reads and executes a program recorded on the HDD 103 as appropriate.

The base station 20 includes a wireless RF circuit 111, a DSP 112, a CPU 113, a memory 114, and an interface 115. The wireless unit 23 is realized by the wireless RF circuit 111 and the DSP 112. The parameter acquisition unit 24 and the tilt angle adjustment unit 25 are realized by the CPU 113. The interface 28 is realized by the interface 115.

The MME 30 includes a CPU 121, an HDD 122, and an interface 123. The EM 40 includes a CPU 131, an HDD 132, and an interface 133, and the interface 43 is realized by the interface 133. In addition, the packet processing unit 44 is realized by the CPU 131. The MDT management server 50 includes a CPU 141, an HDD 142, and an interface 143. The interface 53 is realized by the interface 143. The hole control unit 60 and the notification unit 70 are realized by the CPU 141. The HDD 142 stores the hole information database 54, and also stores data used for an operation of the hole control unit 60 or the notification unit 70 as appropriate. The positional information server 80 includes a CPU 151, an HDD 152, and an interface 153. The interface 83 is realized by the interface 153. The terminal retrieval unit 85 and the positional information update unit 86 are realized by the CPU 151. The HDD 152 stores the positional information database 84, and also stores data used for an operation of the terminal retrieval unit 85 or the positional information update unit 86 as appropriate.

### [Communication Method]

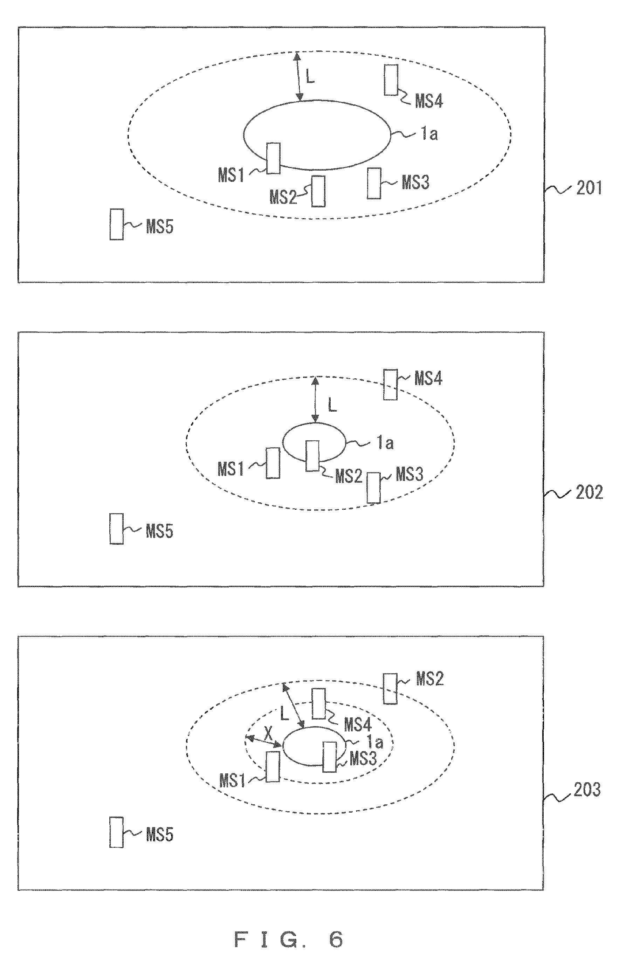

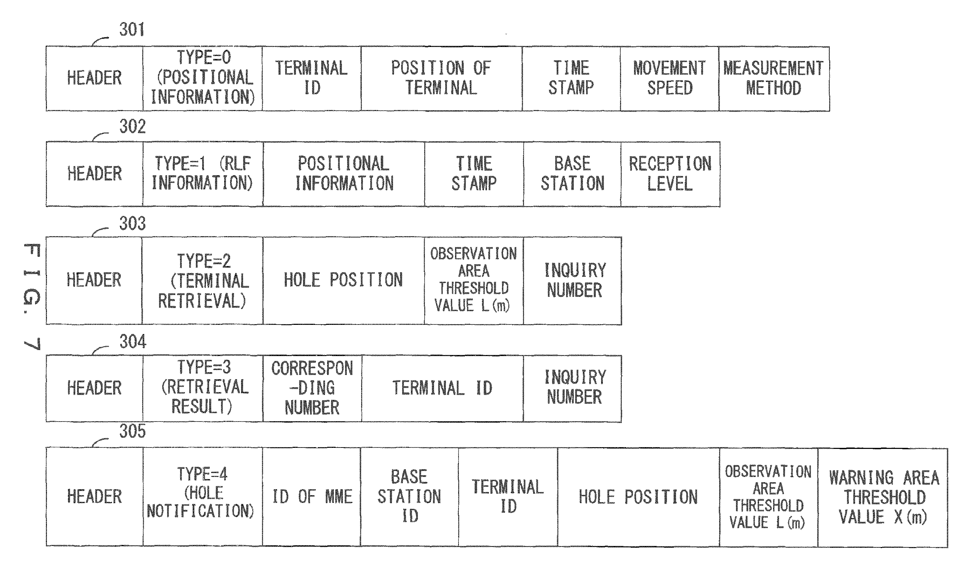

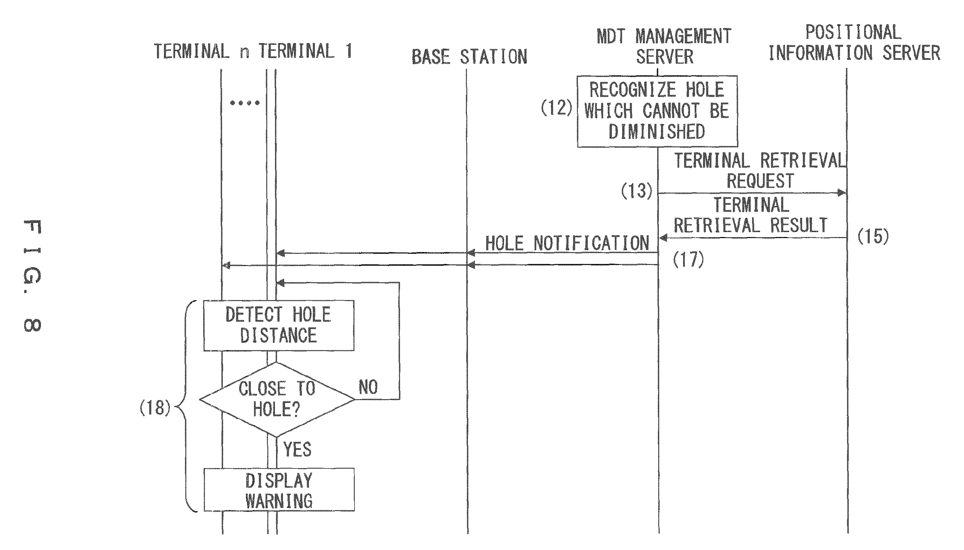

Fig. 6 illustrates examples of a positional relationship between a coverage hole 1a and terminal apparatuses MS1 to MS5. Hereinafter, a description will be made of an example of a case where the coverage hole 1a is specified by information whose notification is sent from the terminal apparatuses MS1 to MS3, and a notification message is transmitted to the terminal apparatuses MS1 to MS4 whose distances from the coverage hole 1a are equal to or smaller than the observation area threshold value. In addition, MS1 to MS5 are assumed to be identifiers (terminal IDs) of the terminal apparatuses 10. Further, the coverage hole 1a is assumed to be located in a communication area of a base station BS1.
(1) It is assumed that the respective terminal apparatuses MS1 to MS5 are distributed as illustrated in a state 201. Each of the terminal apparatuses MS1 to MS5 periodically transmits a positional information notification to the positional information server 80. Fig. 7 illustrates an example of a format of a positional information notification 301. The positional information notification 301 includes a header, a message type field, a terminal ID field, a terminal position field, a time stamp, a movement speed field, and a measurement method field. The positional information server 80 is recorded as a destination in the header. A value indicating the positional information notification is set in the message type field. Here, it is assumed that a type field = 0 indicates the positional information notification. A position of a terminal apparatus is recorded as information on latitude, longitude, and a height of a terminal apparatus in the terminal position field. The time when the position recorded in the terminal position field is measured as the present location is recorded in the time stamp field, and a movement speed of the terminal apparatus 10 is recorded in the movement speed field. A measurement method used to acquire positional information is recorded in the measurement method field.
   The positional information notification 301 transmitted from each of the terminal apparatuses MS1 to MS5 is received by the base station BS1. The base station BS1 transfers the positional information notification 301 to the EM 40, and the EM 40 transfers the positional information notification 301 to the positional information server 80 by referring to the header. The positional information update unit 86 of the positional information server 80 updates the positional information database 84 as illustrated in Fig. 4 on the basis of the positional information notification received from the terminal apparatuses MS1 to MS5. In addition, a notification of positional information and update of the positional information database 84 are assumed to be periodically performed.
(2) It is assumed that the terminal apparatus MS1 crosses the coverage hole 1a and thus communication with the base station BS1 is suspended. If communication with the base station BS1 is restarted, the terminal apparatus MS1 transmits an RLF notification 302 to the MDT management server 50. An example of a format of the RLF notification 302 is illustrated in Fig. 7. The RLF notification 302 includes a header, a message type field, a positional information field, a time stamp, abase station ID field, and a reception level field. The MDT management server 50 is recorded as a destination in the header. Hereinafter, it is assumed that a value of the type field is 1 in the RLF notification 302. The RLF generation unit 14 of the terminal apparatus MS1 records latitude, longitude, and a height from the earth's surface indicating a position where communication with the base station BS1 is suspended, in the positional information field. The time stamp is set to the time when the communication with the base station BS1 is suspended. In addition, the RLF generation unit 14 records the identifier BS1 for identifying the base station 20 whose communication is suspended and a reception level of radio waves received from the base station BS1 in the RLF notification.
   The RLF notification 302 transmitted from the terminal apparatus MS1 is received by the base station BS1. The base station BS1 transfers the RLF notification 302 to the EM 40, and the EM 40 transfers the RLF notification 302 to the MDT management server 50 by referring to the header.
(3) The hole control unit 60 of the MDT management server 50 receives the RLF notification. The RLF processing unit 61 specifies a position where communication is suspended from the RLF information received from the terminal apparatus MS1, and updates the hole information database 54. For example, it is assumed that the following information is recorded in the hole information database 54 as illustrated in No. 1 of Fig. 3.
   A position of the coverage hole 1a: north latitude XX, east longitude YY, and height ZZ
   Base station: BS1
   Reduction possibility: Yes
(4) The parameter changing unit 62 calculates a parameter for reducing the coverage hole 1a registered in the hole information database 54. For example, the parameter changing unit 62 calculates a tilt angle of the antenna 29 of the base station BS1. The parameter changing unit 62 further generates a message for notifying the calculated tilt angle, and transmits the message to the base station BS1 via the transmission unit 51. The hole determination unit 63 stores the number of times of transmission of the message including the update parameter as 1 in correlation with the coverage hole 1a. For example, the number of times of transmission of an update parameter is stored in correlation with a value which can uniquely specify the coverage hole 1a, such as the numbers (No. 1) of the hole information database 54.
(5) The parameter acquisition unit 24 of the base station BS1 acquires the parameter included in the message which is received from the MDT management server 50. Here, a notification of a tilt angle of the antenna 29 is sent. The parameter acquisition unit 24 outputs the acquired tilt angle to the tilt angle adjustment unit 25. The tilt angle adjustment unit 25 sets the antenna 29 to the tilt angle which is input from the parameter acquisition unit 24. The coverage hole 1a is assumed to be reduced due to the process performed by the tilt angle adjustment unit 25 as illustrated in a state 202.
(6) Next, it is assumed that as illustrated in the state 202, the terminal apparatus MS2 passes through the coverage hole 1a, and thus communication between the terminal apparatus MS2 and the base station BS1 is suspended. If communication with the base station BS1 is restarted, the terminal apparatus MS2 transmits the RLF notification 302 to the MDT management server 50. At this time, the terminal apparatus MS2 notifies of a position of the coverage hole 1a by using the RLF notification 30.
(7) When the RLF notification is received, the hole control unit 60 extracts information from the RLF notification and updates the hole information database 54 as appropriate in the same manner as in the procedure (3). Here, the position of the coverage hole 1a and the base station have already been registered, and thus the hole information database 54 is not changed.
(8) The hole determination unit 63 checks whether or not the number of times of transmission of an update parameter in relation to the coverage hole 1a at the same position as that of the coverage hole 1a which is desired to be reduced reaches a predefined number of times (a threshold value of the number of times of change). Here, the threshold value of the number of times of change is assumed to be 2. The changing parameter for reducing the coverage hole 1a has been sent only once, and thus the number of times the changing parameter has been sent does not reach the threshold value of the number of times of change. Therefore, the parameter changing unit 62 obtains a changing parameter and notifies the base station BS1 of the obtained parameter in the same manner as in the procedure (4). The hole determination unit 63 stores the second update parameter which has been transmitted in relation to the coverage hole 1a.
(9) The base station BS1 adjusts a tilt angle in the same manner as in the procedure (5). Here, it is assumed that a size of the coverage hole 1a is not changed due to the process performed by the tilt angle adjustment unit 25.
(10) As illustrated in a state 203, the terminal apparatus MS3 passes through the coverage hole 1a, and thus communication between the terminal apparatus MS3 and the base station BS1 is suspended. The terminal apparatus MS3 transmits the RLF notification 302 to the MDT management server 50 in the same manner as in the procedure (6).
(11) When the RLF notification is received, the hole control unit 60 extracts information from the RLF notification in the same manner as in the procedure (7), and confirms that the position of the coverage hole 1a and the base station have already been registered.
(12) The hole determination unit 63 compares the number of times an update parameter has been transmitted in relation to the coverage hole 1a notified of by the RLF notification , with the threshold value of the number of times of change. At this time, the number of times the changing parameter has been transmitted reaches the threshold value of number of times of change. Therefore, the hole determination unit 63 determines that the coverage hole 1a cannot be reduced, and sets a reduction possibility of the coverage hole 1a to "No". In other words, the hole information database 54 changes the record of the coverage hole 1a as follows.
   A position of the coverage hole 1a: north latitude XX, east longitude YY, and height ZZ
   Base station: BS1
   Reduction possibility: No
   If the reduction possibility is set to "No", the parameter changing unit 62 does not calculate a changing parameter. Fig. 8 is a sequence diagram illustrating an example of a process performed after it is determined that the coverage hole 1 cannot be improved. The number in the parenthesis included in Fig. 8 indicates a procedure number.
(13) If the reduction possibility is set to "No" in relation to the coverage hole 1a, the terminal determination unit 71 transmits a terminal retrieval request to the positional information server 80, so as to inquire about a terminal apparatus whose distance from the coverage hole 1a is equal to or smaller than the observation area threshold value (L). In addition, in this example, the terminal determination unit 71 and the message generation unit 72 are assumed to store the observation area threshold value (L) and the warning area threshold value (X) in advance.
   An example of a message format of the terminal retrieval request is illustrated in 303 of Fig. 7. The terminal retrieval request includes a header, a message type field, a hole position field, an observation area threshold value field, and an inquiry number field. It is assumed that the message type field is set to 2 in the terminal retrieval request. The terminal determination unit 71 sets a value of the hole position field to positional information of the coverage hole 1a, and sets a value of the observation area threshold value field to the observation area threshold value (L). In addition, an inquiry number is recorded in the inquiry number field, the inquiry number being determined so as to uniquely recognize the coverage hole 1a around which the terminal apparatus 10 is located, about which an inquiry is made. The terminal determination unit 71 transmits the terminal retrieval request to the positional information server 80.
(14) The terminal retrieval unit 85 of the positional information server 80 retrieves the terminal apparatus 10 whose distance from a position of the coverage hole 1 designated in the terminal retrieval request is equal to or smaller than the observation area threshold value. The terminal retrieval unit 85 is assumed to refer to the positional information database 84 in order to retrieve the terminal apparatus 10. Here, it is assumed that four terminal apparatuses 10 including MS1, MS2, MS3, and MS4 are located at a distance which is equal to or smaller than the observation area threshold value (L) from the coverage hole 1.
(15) The terminal retrieval unit 85 transmits a retrieval result message to the MDT management server 50 in order to send a notification of the obtained terminal apparatuses 10. An example of a format of the retrieval result message is illustrated in 304 of Fig. 7. The retrieval result message includes a header, a message type field, a corresponding number field, a terminal ID field, and an inquiry number field. It is assumed that the message type field is set to 3 in the retrieval result message. The terminal retrieval unit 85 sets a value of the inquiry number field to the value which has been stored in the inquiry number field of the terminal retrieval request received in the procedure (14). In addition, the number of terminal apparatuses 10 located at a distance within L from the coverage hole 1a is recorded in the corresponding number field, and an identifier for identifying each of the terminal apparatuses 10 located at a distance within L from the coverage hole 1a is recorded in the terminal ID field. Here, it is assumed that 4 is recorded in the corresponding number field, and identifiers including MS1, MS2, MS3, and MS4 are recorded in the terminal ID field.
(16) The terminal determination unit 71 extracts information included in the retrieval result message which is transmitted from the positional information server 80, and outputs the obtained IDs of the terminal apparatuses to the message generation unit 72. At this time, it is assumed that the terminal determination unit 71 also notifies the message generation unit 72 of the coverage hole 1 correlated with the inquiry number.
(17) The message generation unit 72 generates a hole notification when the terminal IDs are input from the terminal determination unit 71. An example of the hole notification is illustrated in 305 of Fig. 7. The hole notification includes a header, a message type field, an MME identifier field, a base station ID field, a terminal ID field, a hole position field, an observation area threshold value field, and a warning area threshold value field. It is assumed that the message type field is set to 4 in the hole notification. The message generation unit 72 records an ID of a base station with which the terminal apparatus 10 as a notification destination currently communicates in the base station ID field, and records an identifier of the terminal apparatus 10 as a notification destination in the terminal ID field. A position of the coverage hole 1 is recorded in the hole position field. L(m) which is the observation area threshold value is recorded in the observation area threshold value field, and X (m) which is the warning area threshold value is recorded in the warning area threshold value field.
   An identifier of the MME 30 connected to the base station 20 with which the terminal apparatus 10 as a notification destination currently communicates is recorded in the MME identifier field. The message generation unit 72 inquires the EM 40 about identification information of the MME 30 connected to the base station 20 with which the terminal apparatus 10 as a notification destination currently communicates. The message generation unit 72 records the information whose notification has been sent from the EM 40, in the MME identifier field. When the hole notification 305 is generated, the message generation unit 72 transmits the message to the terminal apparatuses MS1 to MS4 which are destinations.
(18) The terminal apparatuses MS1 to MS4 receive the hole notification 305. The position detection unit 17 of the terminal which has received the hole notification 305 increases a frequency of detecting a position. For example, the position detection unit 17 may acquire positional information in real time. The calculation unit 15 calculates a distance from the coverage hole 1 which has been notified of by the hole notification each time the present position is detected by the position detection unit 17. The warning unit 16 performs a process for attracting a user's attention when a distance calculated by the calculation unit 15 is equal to or smaller than X m. For example, the warning unit 16 displays information for warning of coming close to the coverage hole 1, on the display 101. In the example of the state 203 illustrated in Fig. 6, distances of MS1, MS3, and MS4 from the coverage hole 1 is equal to or smaller than the warning area threshold value (X). Therefore, in MS1, MS3, and MS4, warnings are issued to users thereof.

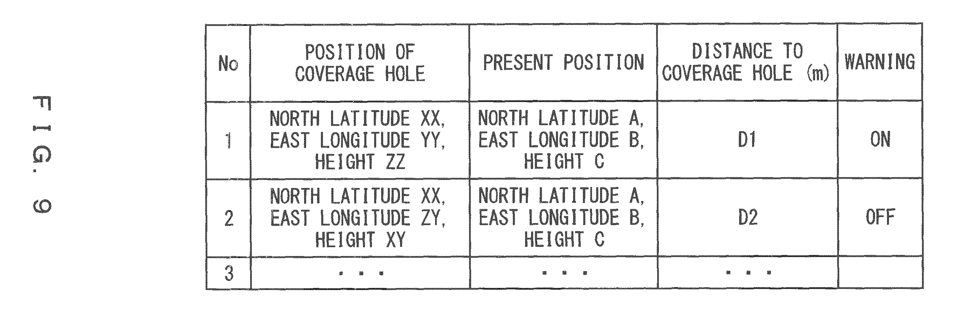

In addition, a single terminal apparatus 10 may receive a hole notification in relation to a plurality of coverage holes 1. Fig. 9 illustrates examples of a calculation result in the calculation unit 15 and a determination result of whether or not a warning is issued. It is assumed that Fig. 9 illustrates a calculation example in the terminal apparatus MS4, and the terminal apparatus MS4 receives hole notifications of two coverage holes 1 including a coverage hole 1a and a coverage hole 1b. The calculation unit 15 of the terminal apparatus MS4 stores positions of the coverage holes 1 included in the hole notifications. Here, it is assumed that No. 1 of Fig. 9 is data of the coverage hole 1a, and No. 2 is data of the coverage hole 1b. When the position detection unit 17 notifies the calculation unit 15 that the present position of the terminal apparatus MS4 is indicated by north latitude A, east longitude B, and a height C, the calculation unit 15 calculates distances from the coverage holes 1a and 1b whose notification has already been sent. An operation used to calculate a distance may employ any operation method for obtaining a distance between two points of which latitude, longitude, and a height are known. Here, it is assumed that a distance from the present location of the terminal apparatus MS4 to the coverage hole 1a is D1, and a distance from the present location of the terminal apparatus MS4 to the coverage hole 1b is D2. Here, it is assumed that a magnitude of the observation area threshold value L and the warning area threshold value X is L>D2>X>D1. Then, since D1 is equal to or smaller than X, the warning unit 16 displays a screen for warning that the terminal apparatus MS4 approaches the coverage hole 1a on the display 101. On the other hand, in relation to the coverage hole 1b, the distance from the terminal apparatus MS4 is smaller than the observation area threshold value, but is larger than the warning area threshold value, and thus a warning is not given. However, a distance between the coverage hole 1b and the terminal apparatus MS4 continues to be observed.

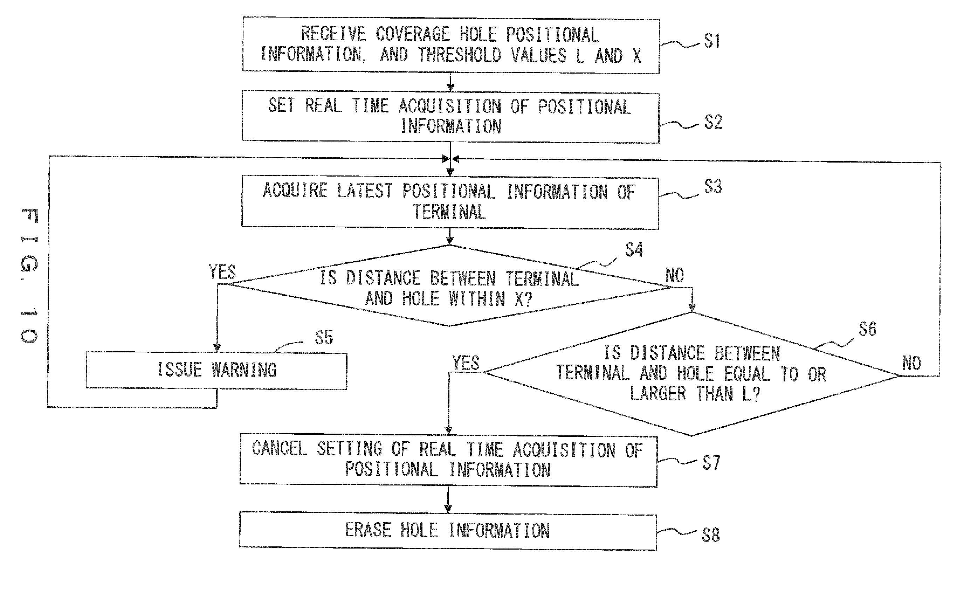

Fig. 10 is a flowchart illustrating an example of an operation of the terminal apparatus 10 which receives a hole notification. Fig. 10 illustrates an example of the operation performed in the procedure (18). If the terminal apparatus 10 receives a hole notification, the calculation unit 15 acquires positional information of the coverage hole 1, the observation area threshold value L, and the warning area threshold value X (step S1). The position detection unit 17 increases a frequency of acquiring positional information, and acquires positional information in real time (steps S2 and S3). The calculation unit 15 obtains a distance between the terminal apparatus 10 and the coverage hole 1, and the warning unit 16 compares the distance with the warning area threshold value X (step S4). If the distance between the terminal apparatus 10 and the coverage hole 1 is equal to or smaller than the warning area threshold value X, the warning unit 16 displays a warning on the display 101 in order to attract user's attention (Yes in step S4, and step S5). Then, the processes in step S3 and subsequent steps are repeatedly performed.

On the other hand, if the distance between the terminal apparatus 10 and the coverage hole 1 is larger than the warning area threshold value X, the warning unit 16 compares the distance between the terminal apparatus 10 and the coverage hole 1 with the observation area threshold value L (No in step S4, and step S6). If the distance between the terminal apparatus 10 and the coverage hole 1 is smaller than the observation area threshold value L, the processes in step S3 and subsequent steps are repeatedly performed (No in step S6). If the distance between the terminal apparatus 10 and the coverage hole 1 is equal to or larger than the observation area threshold value L, a possibility of approaching the coverage hole 1 is reduced, and thus monitoring a distance to the coverage hole 1 is finished. Therefore, the position detection unit 17 decreases a frequency of acquiring positional information (step S7). In addition, the calculation unit 15 erases data on the coverage hole 1 whose distance from the terminal apparatus 10 is larger than the observation area threshold value (step S8).

As mentioned above, when the terminal apparatus 10 comes close to the coverage hole 1 which is determined as being incapable of being improved, a warning is given to a user of the terminal apparatus 10, and the user can easily avoid the coverage hole so that communication is performed.

### <Second Embodiment>

In a second embodiment, a description will be made of a case where a base station 90 specifies the terminal apparatus 10 which is a notification target of a position of the coverage hole 1.

### [Apparatus Configuration]

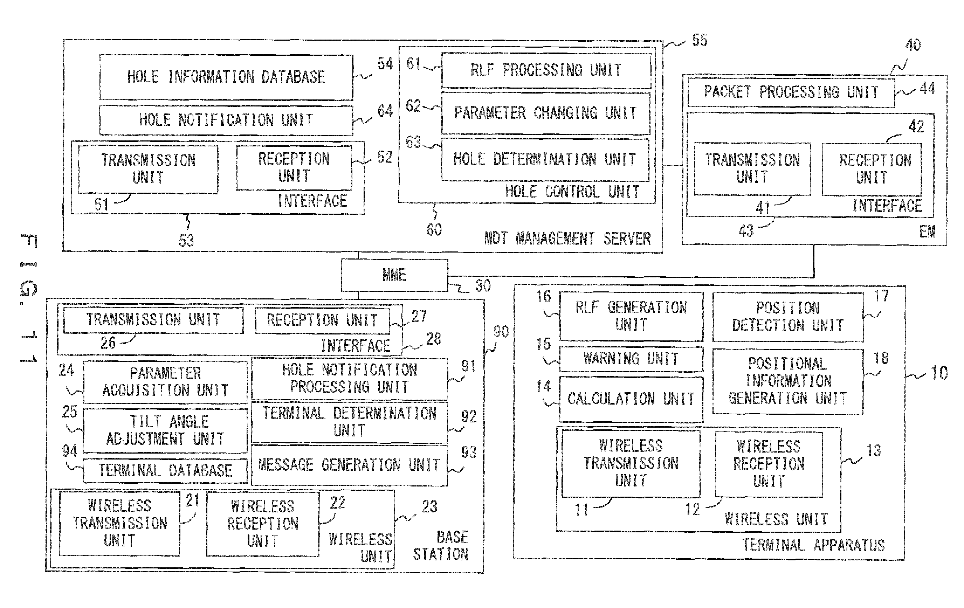

Fig. 11 is a diagram illustrating configuration examples of apparatuses which operate in the second embodiment. Configurations or operations of the terminal apparatus 10, the MME 30, and the EM 40 are the same as in the first embodiment.

A base station 90 includes not only the wireless unit 23, the parameter acquisition unit 24, the tilt angle adjustment unit 25, and the interface 28, but also a hole notification processing unit 91, a terminal determination unit 92, a message generation unit 93, and a terminal database 94. When a message for notifying a position of the coverage hole 1 which cannot be improved is received from an MDT management server 55, the hole notification processing unit 91 extracts the position of the coverage hole 1. The terminal determination unit 92 specifies a terminal which is a notification target of information on the coverage hole 1. At this time, the terminal determination unit 92 may refer to the terminal database 94 as appropriate. The terminal database 94 stores an identifier of a terminal which currently performs communication with the base station 90. The message generation unit 93 generates a message which will be transmitted to the terminal specified by the terminal determination unit 92. A format of the message generated by the message generation unit 93 or a message transmission method will be described later. Operations of the wireless unit 23, the parameter acquisition unit 24, the tilt angle adjustment unit 25, and the interface 28 are the same as in the base station 20.

In the present embodiment, the MDT management server 55 is used instead of the MDT management server 50. The MDT management server 55 includes not only a hole notification unit 64 but also the interface 53, the hole information database 54, and the hole control unit 60. The hole notification unit 64 notifies the base station 90 of a position of the coverage hole 1 which is determined as being incapable of being improved by the hole determination unit 63. In addition, the hole notification unit 64 is assumed to store an observation area threshold value and a warning area threshold value in advance. Operations of the interface 53, the hole information database 54, and the hole control unit 60 are the same as in the first embodiment.

### [Communication Method]

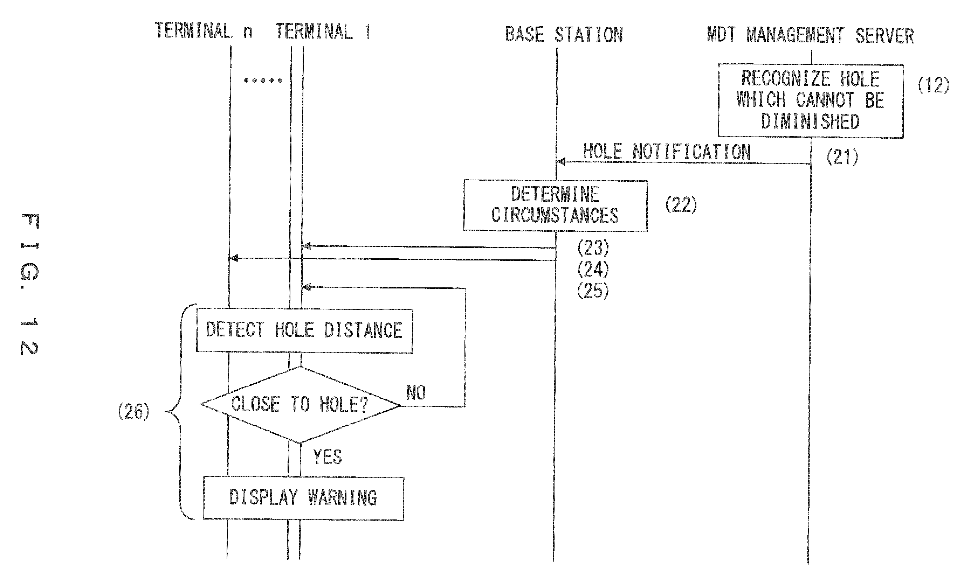

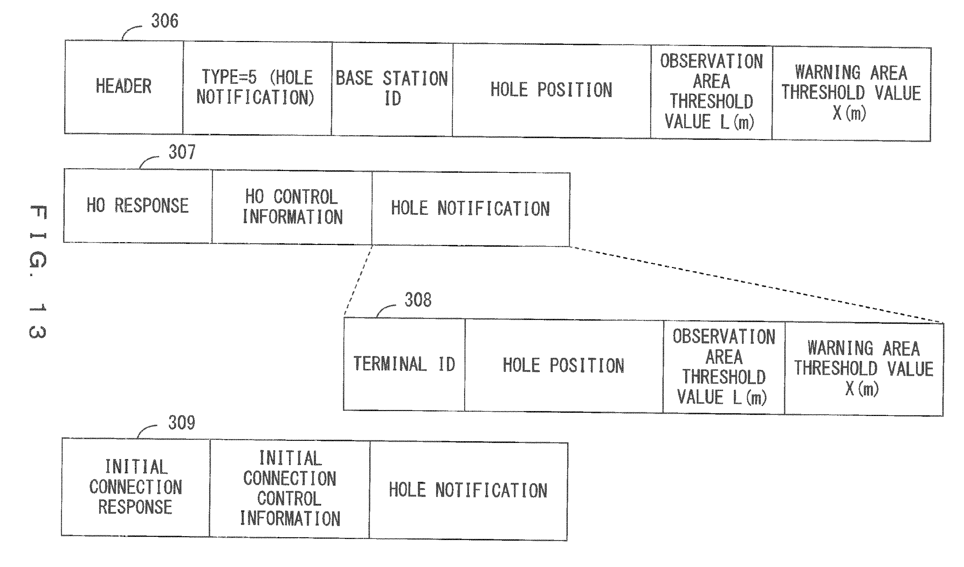

Fig. 12 is a sequence diagram illustrating an example of a process performed after it is determined that a coverage hole 1a cannot be reduced in the second embodiment. The number in the parenthesis included in Fig. 12 indicates a procedure number. Operations performed from starting of communication in a terminal to detection of the coverage hole 1 which cannot be improved are the same as the procedures (1) to (12) described in the first embodiment.
(21) If a reduction possibility of the coverage hole 1a is set to "No", the hole notification unit 64 generates a hole notification 306 which will be transmitted to the base station 90. Fig. 13 illustrates an example of a format of the hole notification 306. The hole notification 306 includes a header, a message type field, a base station ID field, a hole position field, an observation area threshold value field, and a warning area threshold value field. It is assumed that the message type field is set to 5 in the hole notification 306. The hole notification unit 64 records an identifier of a base station whose communication area includes the coverage hole 1a or an identifier of a base station whose communication area is adjacent to the coverage hole 1a, in the base station ID field. In addition, an address of the base station whose identifier is recorded in the base station ID field is set in the header. Values recorded in the hole position field, the observation area threshold value field, and the warning area threshold value field are the same as those of the hole notification 305. In the following description, a base station BS1 is notified of a position of the coverage hole 1a.
(22) When the hole notification 305 is received, the hole notification processing unit 91 of the base station 90 acquires positional information of the coverage hole 1a from the value of the hole position field. The hole notification processing unit 91 outputs the positional information of the coverage hole 1a to the message generation unit 93. The terminal determination unit 92 specifies a terminal apparatus which currently communicates with the base station 90 by referring to the terminal database 94. In addition, the terminal determination unit 92 also specifies the terminal apparatus 10 which is being handed over (HO) to the base station 90. Further, the terminal determination unit 92 also specifies the terminal apparatus 10 which is being connected to the base station 90 because of being newly powered on or the like within a communication area of the base station 90. The terminal determination unit 92 outputs an identifier of the specified terminal apparatus 10 to the message generation unit 93 coupling the identifier with a state of the terminal apparatus 10.
(23) The message generation unit 93 transmits a hole information notification to the terminal apparatus 10 of which communication is in progress, among the terminal apparatuses 10 which have been notified of by the terminal determination unit 92. The hole information notification includes not only a header but also a terminal ID field, a hole position field, an observation area threshold value field, and a warning area threshold value field. An identifier of the destination terminal apparatus 10 is recorded in the terminal ID field, and a position of the coverage hole 1 is recorded in the hole position field. In addition, information on the observation area threshold value L is recorded in the observation area threshold value field, and information on the warning area threshold value X is recorded in the warning area threshold value field. The message generation unit 93 transmits the generated message to the destination terminal apparatus 10 via the wireless transmission unit 21.
(24) The message generation unit 93 generates a message (handover response message) which will be transmitted to the terminal apparatus 10 which is being handed over to the base station 90, among the terminal apparatuses 10 which have been notified of by the terminal determination unit 92. The handover response message includes information on the coverage hole 1a. An example of the handover response message 307 is illustrated in Fig. 13. The handover response message is transmitted through signaling between the base station 90 and the terminal apparatus 10. The handover response message includes a handover response field, a handover control information field, and a hole notification field. Information indicating that a message is a handover response is recorded in the handover response field. Information which is used to hand over the terminal apparatus 10 is recorded in the handover control information field. In addition, a terminal ID, a position of the coverage hole 1, the observation area threshold value, and the warning area threshold value are recorded in the hole notification field. An example of the hole notification field is illustrated in 308 of Fig. 13. Further, the observation area threshold value is recorded in an observation area field, and the warning area threshold value is recorded in a warning area field.
(25) The message generation unit 93 generates a message (initial connection response message) which will be transmitted to the terminal apparatus 10 which is being connected to the base station 90, among the terminal apparatuses 10 which have been notified of by the terminal determination unit 92. The initial connection response message includes information on the coverage hole 1a. An example of the initial connection response message 309 is illustrated in Fig. 13. The initial connection response message is also transmitted through signaling between the base station 90 and the terminal apparatus 10. The initial connection response message includes an initial connection response field, an initial connection control information field, and a hole notification field. Information indicating that a message is an initial connection response is recorded in the initial connection response field. Information used to initially connect the terminal apparatus 10 to the base station 90 is recorded in the initial connection control information field. The hole notification field is the same as the hole notification field 308 of the handover response.
(26) The terminal apparatus 10 in an observation area of the base station 90 receives any one of the messages transmitted in the procedures (23) to (25). The position detection unit 17 of the terminal apparatus 10 which has received a notification of the position of the coverage hole 1a increases a frequency of detecting a position. In addition, the calculation unit 15 calculates a distance from the coverage hole 1 whose notification has been sent by using the hole notification, each time the present position is detected by the position detection unit 17. The warning unit 16 displays information for warning of being close to the coverage hole 1 on the display 101 when a distance calculated by the calculation unit 15 is equal to or smaller than X m.

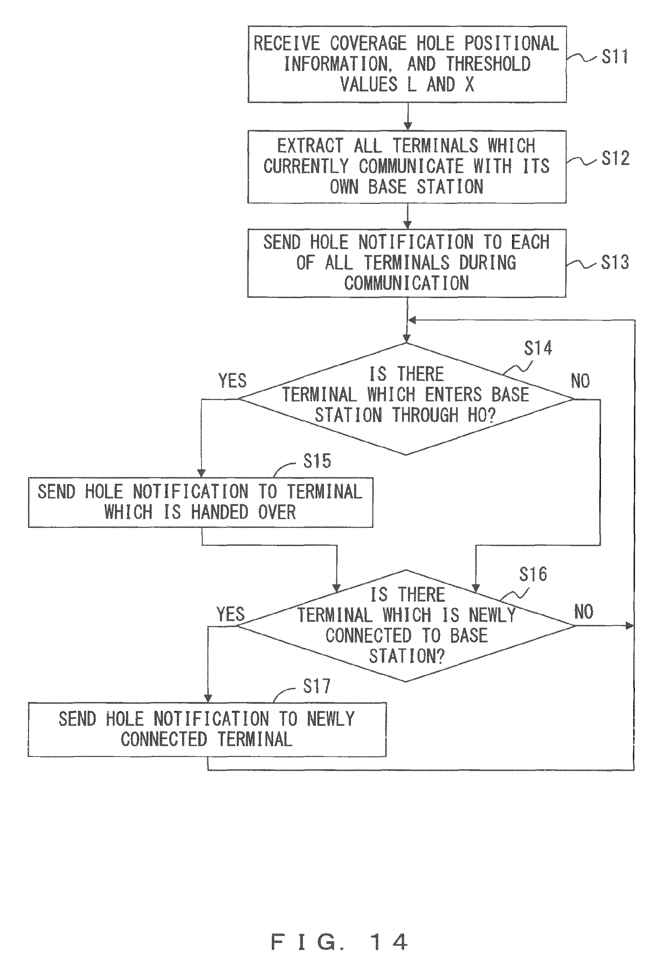

Fig. 14 is a flowchart illustrating an example of a process performed by the base station 90 when a notification of a position of the coverage hole 1 is sent. When the base station 90 receives the hole notification 306 from the MDT management server 50, the hole notification processing unit 91 extracts positional information of the coverage hole 1, the observation area threshold value L, and the warning area threshold value X from the hole notification 306 (step S11). The hole notification processing unit 91 outputs the extracted information to the terminal determination unit 92. The terminal determination unit 92 extracts all the terminal apparatuses 10 which are currently in communication with the base station 90, and notifies the message generation unit 93 of the extracted terminal apparatuses (step S12). The message generation unit 93 transmits a hole notification to all the extracted terminals (step S13).

Next, the terminal determination unit 92 checks whether or not there is the terminal apparatus 10 which enters the communication area of the base station 90 through handover (step S14). If the terminal apparatus 10 which enters the communication area of the base station 90 through handover can be specified, the terminal determination unit 92 notifies the message generation unit 93 of the specified terminal apparatus 10 (Yes in step S14). The message generation unit 93 transmits the handover response message 307 (refer to Fig. 13) to the terminal apparatus 10 which has been notified of by the terminal determination unit 92 (step S15).

In addition, the terminal determination unit 92 checks whether or not there is the terminal apparatus 10 which is starting new connection to the base station 90 (step S16). If the terminal apparatus 10 which is starting new connection to the base station 90 can be specified, the terminal determination unit 92 notifies the message generation unit 93 of the specified terminal apparatus 10 (Yes in step S16). The message generation unit 93 transmits a new connection response message 309 (refer to Fig. 13) to the terminal apparatus 10 which has been notified of by the terminal determination unit 92, so as to send information on the coverage hole 1 (step S17). Then, the processes in step S13 and the subsequent steps are repeatedly performed.

In addition, Fig. 14 illustrates one process example, and there can be a case where an order of the processes is changed in accordance with implementations, such as, for example, the processes in steps S16 and S17 can be performed before the processes in steps S14 and S15.

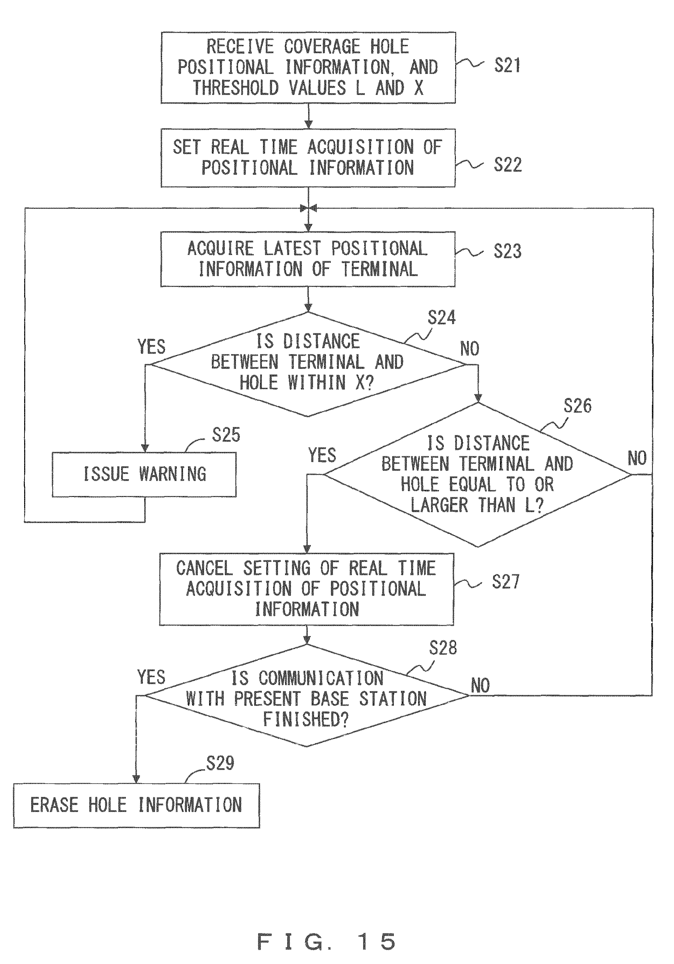

Fig. 15 is a flowchart illustrating an example of an operation of the terminal apparatus 10 which is notified of a position of the coverage hole 1. The calculation unit 15 of the terminal apparatus 10 acquires positional information of the coverage hole 1, the observation area threshold value L, and the warning area threshold value X from information received from the base station 90 (step S21). Processes in steps S22 to S27 are the same as the processes in steps S2 to S7 described with reference to Fig. 10. After the position detection unit 17 decreases a frequency of acquiring positional information in step S27, the calculation unit 15 checks whether or not communication between the terminal apparatus 10 and the base station 90 which is currently connected thereto is finished (step S28). If communication with the currently connected base station 90 is finished, the calculation unit 15 erases the positional information of the coverage hole 1, the observation area threshold value L, and the warning area threshold value X (Yes in step S28, and step S29). On the other hand, if communication with the currently connected base station 90 is not finished, the processes in step S23 and the subsequent steps are repeatedly performed (No in step S28).

### <Third Embodiment>

In a third embodiment, a description will be made of a case where the terminal apparatus 10 which is a notification target of a position of the coverage hole 1 is specified by the MME 30.

### [Apparatus Configuration]

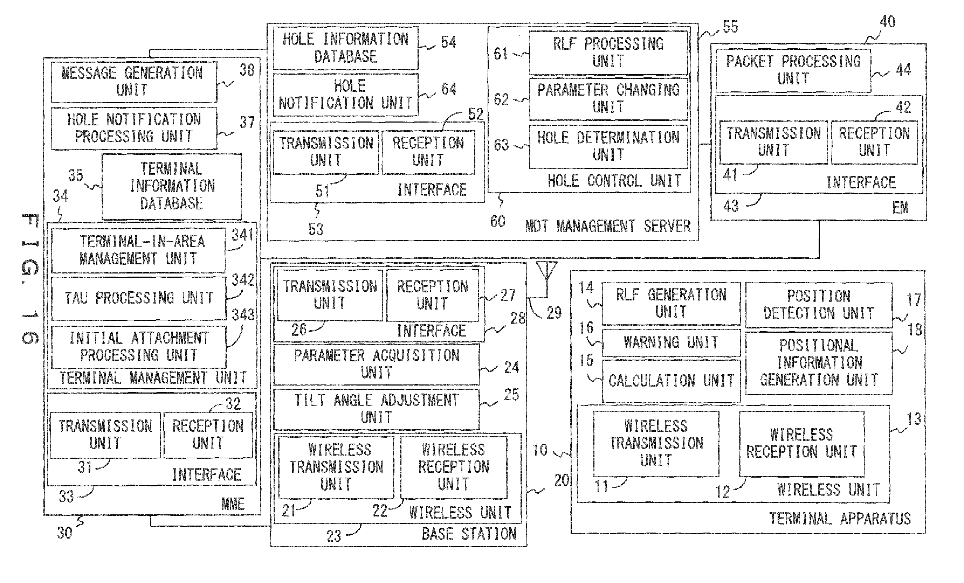

Fig. 16 is a diagram illustrating configuration examples of apparatuses which operate in the third embodiment. Configurations or operations of the base station 20 and the EM 40 are the same as in the first embodiment. A configuration of the terminal apparatus 10 is the same as in the first embodiment, but, in the third embodiment, the terminal apparatus 10 is assumed to notify the MME 30 of positional information. In the present embodiment, the MDT management server 55 is included in a network.

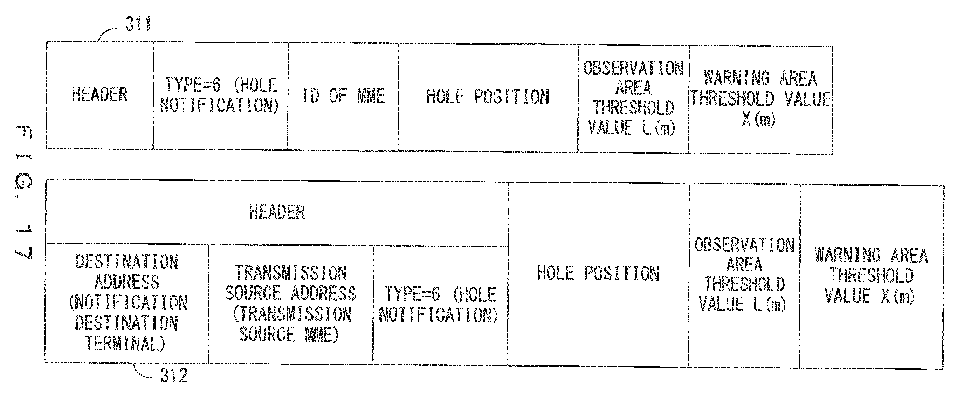

A configuration and an operation of the MDT management server 55 are the same as in the second embodiment. However, the hole notification unit 64 is assumed to notify the MME 30 of a position of the coverage hole 1 which is determined as being incapable of being improved by the hole determination unit 63. Fig. 17 illustrates an example of a message format of a hole notification 311. The hole notification unit 64 of the MDT management server 55 specifies the base station 20 whose communication area includes the coverage hole 1 or the base station 20 whose communication area is adjacent to the coverage hole 1 when the hole notification 311 is generated. In addition, the hole notification unit 64 inquires the EM 40 about the MME 30 which is connected to the specified base station 20. The hole notification unit 64 sets the MME 30 whose notification has been sent from the EM 40 as a destination of the hole notification 311, and records an identifier thereof in an MME identifier field of the hole notification 311. Values recorded in a hole position field, an observation area field, and a warning area field are the same as those of the hole notification 205.

The MME 30 used in the present embodiment includes an interface 33, a terminal management unit 34, a terminal information database 35, a hole notification processing unit 37, and a message generation unit 38. The interface 33 is provided with a transmission unit 31 and a reception unit 32, and performs communication with the base station 20, the EM 40, and the MDT management server 55. The terminal management unit 34 includes a terminal-in-area management unit 341, a tracking area update (TAU) processing unit 342, and an initial attachment processing unit 343. The terminal-in-area management unit 341 processes information on the terminal apparatus 10 which is located in a tracking area managed by the MME 30 and whose connection with the MME 30 is established. The TAU processing unit 342 processes a message which is transmitted and received when tracking area update (TAU) is performed. Here, the tracking area update indicates that the terminal apparatus 10 moves to a tracking area managed by the MME 30 from another tracking area. The initial attachment processing unit 343 processes a message which is transmitted and received for initial attachment. The initial attachment is a process in which the terminal apparatus 10 is connected to the MME 30 when the terminal apparatus 10 is powered on within the tracking area managed by the MME 30. The terminal-in-area management unit 341, the TAU processing unit 342, and the initial attachment processing unit 343 all update the terminal information database 35 when a connection relationship between the terminal apparatus 10 and the MME 30 is updated by transmission and reception of a message. The terminal information database 35 stores an identifier of the terminal apparatus 10 and a position of the terminal apparatus 10 in correlation with each other.

The hole notification processing unit 37 processes the hole notification 311 received from the MDT management server 55 so as to acquire a position of the coverage hole 1, the observation area threshold value, and the warning area threshold value. The hole notification processing unit 37 outputs the acquired information to the message generation unit 38. The message generation unit 38 specifies the terminal apparatus 10 connected to the MME 30 by referring to the terminal information database 35. In addition, the message generation unit 38 generates a notification message 312 which will be transmitted to the specified terminal apparatus 10. An example of a format of the notification message 312 is illustrated in Fig. 17. In a header of the notification message 312, an address of the MME 30 is set as a transmission source address, and an address of the terminal apparatus 10 which is a destination is set as a destination address. In addition, the header includes a message type field, and a value (6 in the example of Fig. 17) correlated with the notification message 312 is recorded in the message type field. Further, the notification message 312 includes a position of the coverage hole 1, the observation area threshold value, and the warning area threshold value.

In addition, the interface 33 is realized by the interface 123 (Fig. 5). In addition, the CPU 121 reads a program recorded on the HDD 122 and thus operates as the terminal management unit 34, the terminal information database 35, the hole notification processing unit 37, and the message generation unit 38.

### [Communication Method]

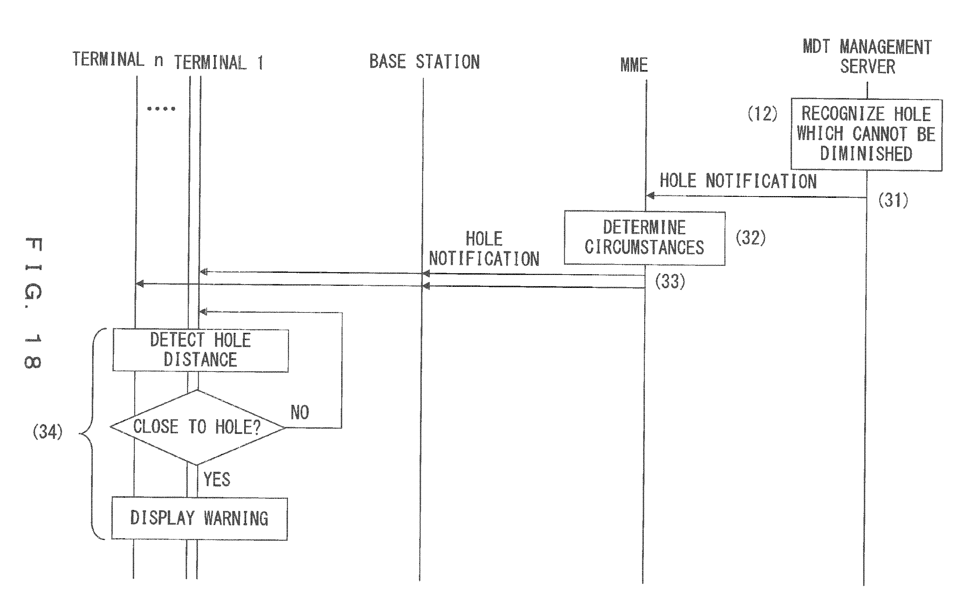

Fig. 18 is a sequence diagram illustrating an example of a process performed after it is determined that the coverage hole 1a cannot be reduced in the third embodiment. Operations performed from starting of communication in a terminal to detection of the coverage hole 1 which cannot be improved are the same as the procedures (1) to (12) described in the first embodiment.
(31) If a reduction possibility of the coverage hole 1a is set to "No", the hole notification unit 64 generates a hole notification 311 which will be transmitted to the MME 30.
(32) When the hole notification 311 is received, the hole notification processing unit 37 of the MME 30 acquires positional information of the coverage hole 1a from the value of the hole position field. The hole notification processing unit 37 outputs the positional information of the coverage hole 1a to the message generation unit 38. The message generation unit 38 specifies a terminal apparatus 10 which is currently connected to the MME 30 by referring to the terminal information database 35. In addition, the message generation unit 38 inquires the TAU processing unit 342 about information on the terminal apparatus 10 which is updating a tracking area of the MME 30. Further, the message generation unit 38 inquires the initial attachment processing unit 343 about the terminal apparatus 10 which has requested initial attachment.
(33) The message generation unit 38 transmits the notification message 312 to the terminal apparatus 10 recorded in the terminal information database 35. In addition, the message generation unit 38 also transmits the notification message 312 to the terminal apparatuses 10 which have been notified of by the TAU processing unit 342 and the initial attachment processing unit 343.
(34) In the terminal apparatus 10 which has received the notification message 312, the position detection unit 17 increases a frequency of detecting a position of the terminal apparatus 10. The calculation unit 15 calculates a distance from the position of the coverage hole 1 included in the notification message 312 to the present location on the basis of information obtained from the position detection unit 17. Next, the warning unit 16 compares the calculation result from the calculation unit 15 with the warning area threshold value X. If the distance from the coverage hole 1 to the present location is equal to or smaller than the warning area threshold value X, the warning unit 16 displays information for informing of coming close to the coverage hole 1, on the display 101. If the distance from the coverage hole 1 to the present location is larger than the warning area threshold value X, the warning unit 16 compares the distance from the coverage hole 1 to the present location with the observation area threshold value L. If the distance from the coverage hole 1 to the present location is larger than the observation area threshold value L, the position detection unit 17 decreases a frequency of acquiring positional information. In addition, in a case where communication is not performed, the terminal apparatus 10 may perform so as not to acquire positional information in real time or not to issue a warning. In this case, a processing burden on a terminal which does not perform communication is reduced.

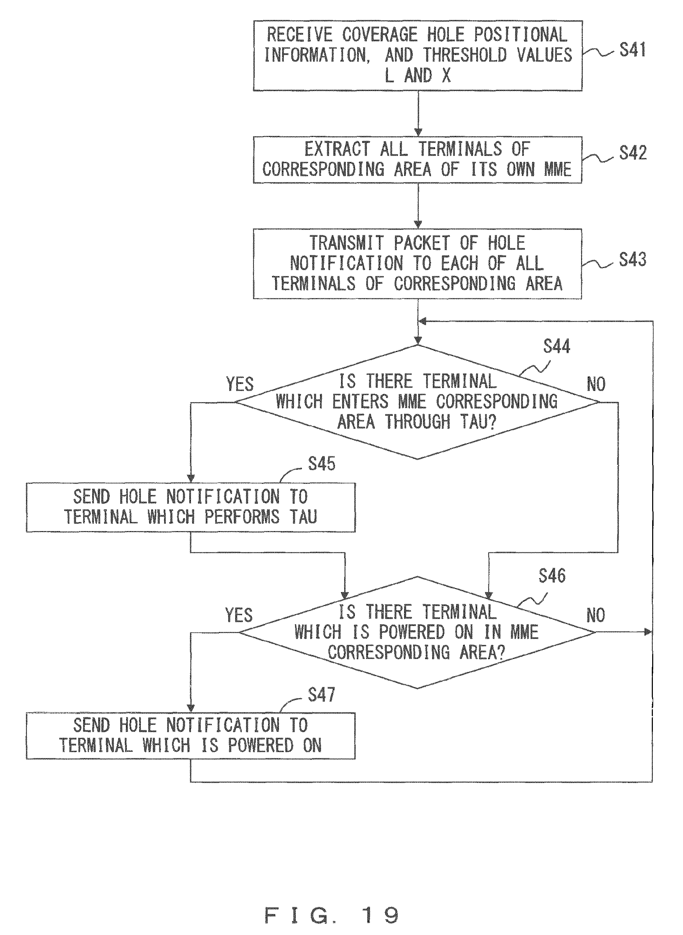

Fig. 19 is a flowchart illustrating an example of a process performed by the MME 30 when a notification of a position of the coverage hole 1 is received. Fig. 19 illustrates an example of the process in the procedure (32) of Fig. 18. In addition, Fig. 19 illustrates one process example, and there can be a case where an order of processes is changed in accordance with implementations, such as, for example, processes in steps S46 and S47 can be performed before processes in steps S44 and S45.

When the MME 30 receives the hole notification 311 from the MDT management server 50, the hole notification processing unit 37 extracts positional information of the coverage hole 1, the observation area threshold value L, and the warning area threshold value X from the hole notification 311 (step S41). The hole notification processing unit 37 outputs the extracted information to the message generation unit 38. The message generation unit 38 acquires information on the terminal apparatus 10 which is currently connected to the MME 30 from the terminal information database 35, and transmits the notification message 312 to the obtained terminal apparatus 10 (steps S42 and S43).

Next, the message generation unit 38 inquires the TAU processing unit 342 about whether or not there is the terminal apparatus 10 which enters a corresponding area of the MME 30 through tracking area update (step S44). If the terminal apparatus 10 which enters the corresponding area of the MME 30 can be specified, the message generation unit 38 transmits the notification message 312 to the specified terminal apparatus 10 to notify of information on the coverage hole 1 (Yes in step S44, and step S45).

In addition, the message generation unit 38 inquires the initial attachment processing unit 343 about whether or not there is the terminal apparatus 10 which is starting new connection to the MME 30 (step S46). If the terminal apparatus 10 which is starting new connection to the MME 30 can be specified, the message generation unit 38 transmits the notification message 312 to the specified terminal apparatus 10 to notify of information on the coverage hole 1 (Yes in step S46, and step S47). The processes in step S44 and the subsequent steps are repeatedly performed in both a case where a determination result in step S46 is negative (No) and a case where the process in step S47 is completed.

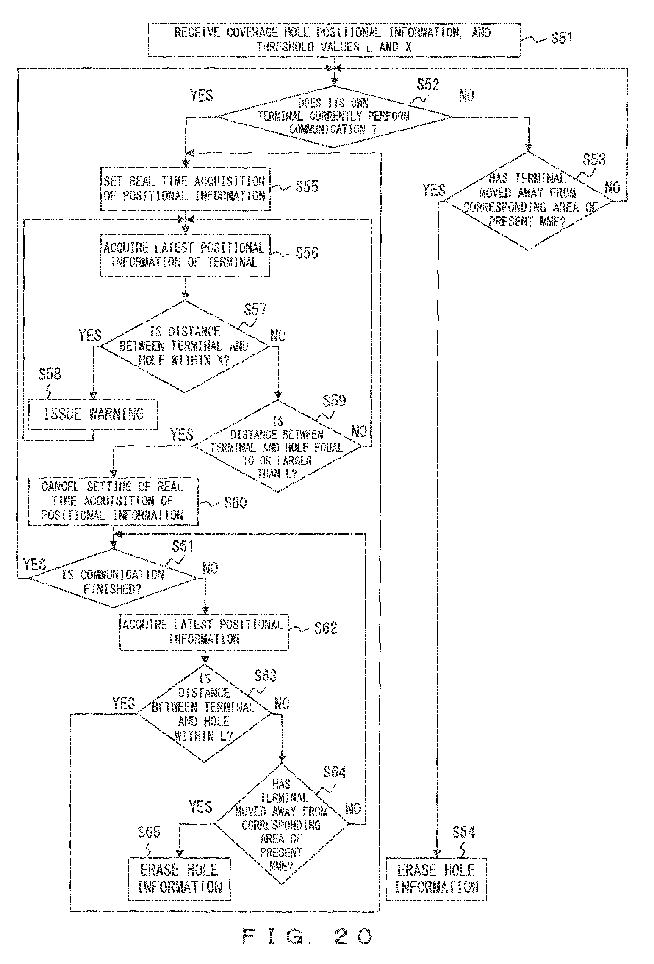

Fig. 20 is a flowchart illustrating an example of an operation of a terminal apparatus 10 which has been notified of a position of a coverage hole 1. Fig. 20 illustrates an example of the process in the procedure (34) of Fig. 18. The calculation unit 15 of the terminal apparatus 10 acquires positional information of the coverage hole 1, the observation area threshold value L, and the warning area threshold value X from information received from the MME 30 (step S51). In a case where the terminal apparatus 10 is not performing communication, the calculation unit 15 checks whether or not the terminal apparatus has moved from a corresponding area of the present MME 30 to a corresponding area of another MME 30 (No in step S52, and step S53). If the terminal apparatus has moved to the corresponding area of another MME 30, the calculation unit 15 deletes information on the coverage hole 1 which is currently stored (Yes in step S53, and step S54). If the terminal apparatus has not moved to the corresponding area of another MME 30, the processes in step S52 and the subsequent steps are repeatedly performed (No in step S53).

On the other hand, in a case where the terminal apparatus 10 currently is performing communication, the position detection unit 17 starts acquiring positional information in real time (Yes in step S52, and step S55). Processes in steps S56 to S60 are the same as the processes in steps S3 to S7 described with reference to Fig. 10. After the position detection unit 17 decreases a frequency of acquiring positional information in step S60, the calculation unit 15 checks whether or not communication of the terminal apparatus 10 is finished (step S61). In a case where communication of the terminal apparatus 10 is finished, the processes in step S52 and the subsequent steps are repeatedly performed (Yes in step S61).

In a case where communication of the terminal apparatus 10 is not finished, the calculation unit 15 calculates again a distance from the coverage hole 1 by using the latest positional information obtained from the position detection unit 17, and then compares an obtained value with the observation area threshold value L (No in step S61, and steps S62 and S63). If the distance between the terminal apparatus 10 and the coverage hole 1 is within the observation area threshold value L, the processes in step S55 and the subsequent steps are repeatedly performed (Yes in step S63), If the distance between the terminal apparatus 10 and the coverage hole 1 exceeds the observation area threshold value L, the calculation unit 15 checks whether or not the terminal apparatus has moved from the corresponding area of the present MME 30 to a corresponding area of another MME 30 (No in step S63, and step S64). In a case where the terminal apparatus has moved to the corresponding area of another MME 30, the calculation unit 15 deletes information on the coverage hole 1 which is currently stored (Yes in step S64, and step S65). If the terminal apparatus has not moved to the corresponding area of another MME 30, the processes in step S61 and the subsequent steps are repeatedly performed (No in step S63).

### <Fourth Embodiment>

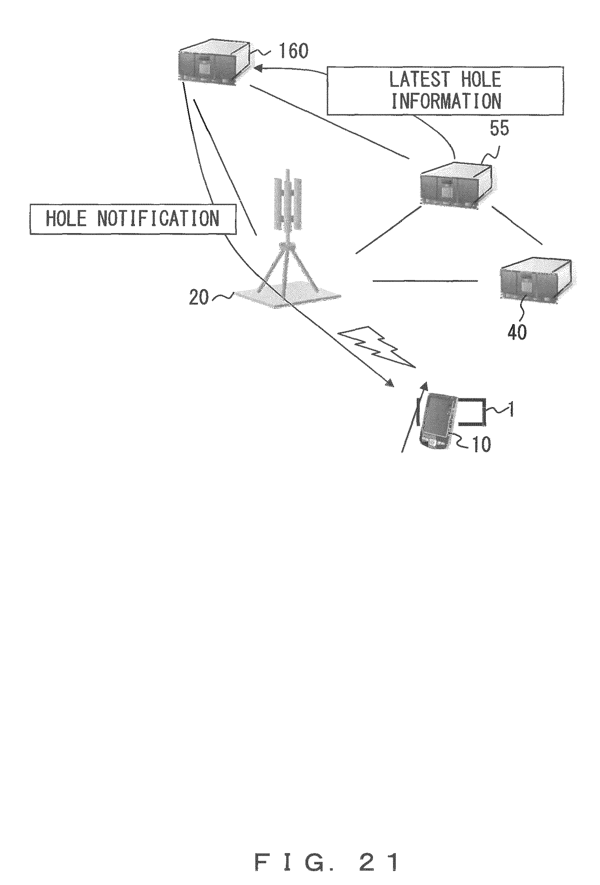

Fig. 21 illustrates an example of a system according to a fourth embodiment. In the fourth embodiment, when a coverage hole 1 which cannot be improved is detected, the MDT management server 55 notifies an application server 160 of the latest information on a position of the coverage hole 1. The application server 160 stores an identifier of each terminal apparatus 10 which has downloaded an application provided by the application server 160. The application server 160 sends a notification of a position of the coverage hole 1 to all terminal apparatuses 10 whose identifiers are stored in the application server 160, each time information on a position of the coverage hole 1 is updated. The terminal apparatus 10 measures a distance between the present location and the coverage hole 1 correlated with the base station 20 in communication with the terminal apparatus 10 among the coverage holes 1 whose notifications have been sent. If a distance from the coverage hole 1 is equal to or smaller than the warning area threshold value, the terminal apparatus 10 displays a message on the display 101 in order to issue a warning to a user.

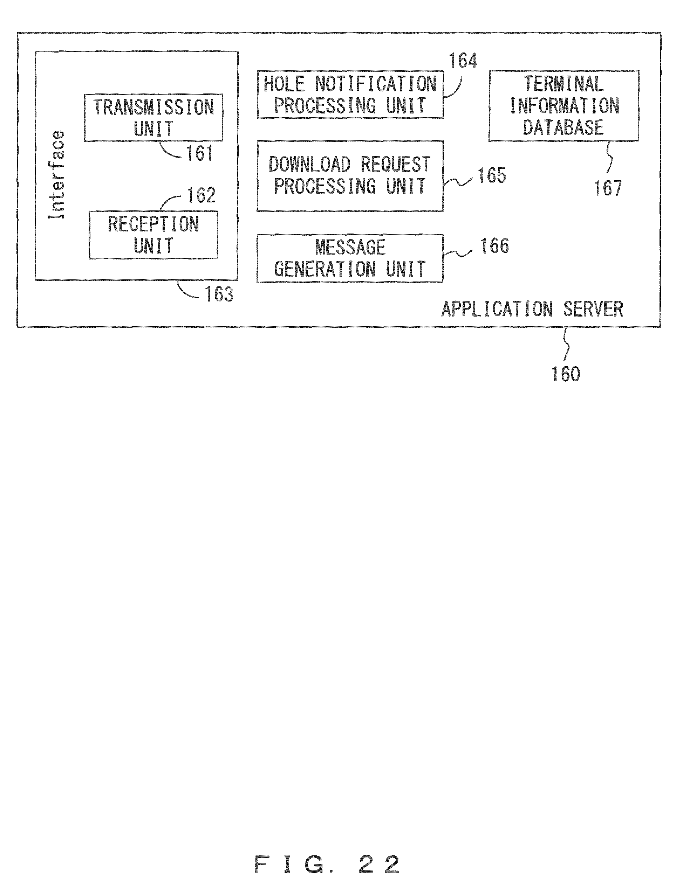

Fig. 22 illustrates a configuration example of the application server 160. The application server 160 includes an interface 163, a hole notification processing unit 164, a download request processing unit 165, a message generation unit 166, and a terminal information database 167. The interface 163 is provided with a transmission unit 161 and a reception unit 162, and performs communication with the base station 20, the MME 30, the EM 40, and the MDT management server 55 as appropriate. The hole notification processing unit 164 processes a hole notification which is received from the MDT management server 55. A format of the hole notification which is transmitted from the MDT management server 55 to the application server 160 is the same as the hole notification 306 illustrated in Fig. 13. The hole notification processing unit 164 acquires a position of the coverage hole 1, the observation area threshold value (L), the warning area threshold value (X), and an identifier of the base station 20 from the hole notification, and stores the information. Here, it is assumed that an identifier of the base station 20 whose communication area includes the coverage hole 1 whose notification has been sent or an identifier of the base station 20 whose communication area is adjacent to the coverage hole 1 is recorded in the hole notification.

The download request processing unit 165 processes a download request which is made from the terminal apparatus 10 to the application server 160. At this time, the download request processing unit 165 requests the terminal apparatus 10 which is allowed to download an application, to send a notification of an identifier for identifying the terminal apparatus 10. The download request processing unit 165 acquires the identifier of the terminal apparatus 10 from a message which is transmitted from the terminal apparatus 10, and stores the identifier in the terminal information database 167.

When the information on the coverage hole 1 stored in the hole notification processing unit 164 is updated, the message generation unit 166 generates a message for transmitting information stored in the hole notification processing unit 164 in correlation with the coverage hole 1 to the terminal apparatus 10. The terminal apparatuses 10 which are transmission destination of the message are all terminal apparatuses 10 whose identifiers are stored in the terminal information database 167.

The application server 160 includes a CPU, an HDD, and an interface as hardware in the same manner as the EM 40, the MDT management server 55, or the like. The interface operates as the transmission unit 161 and the reception unit 162. The CPU reads a program from the HDD so as to operate as the hole notification processing unit 164, the download request processing unit 165, the message generation unit 166, and the terminal information database 167.

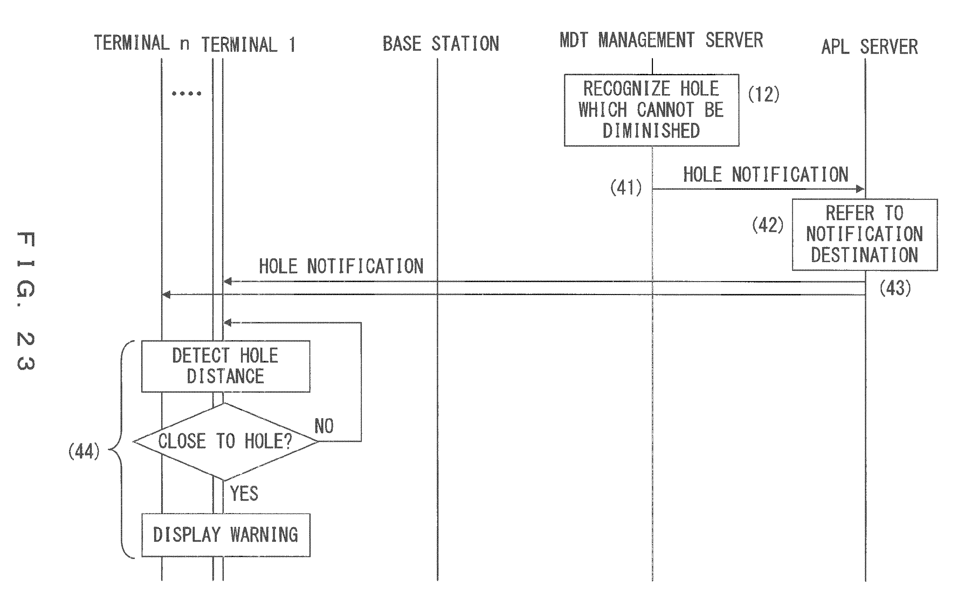

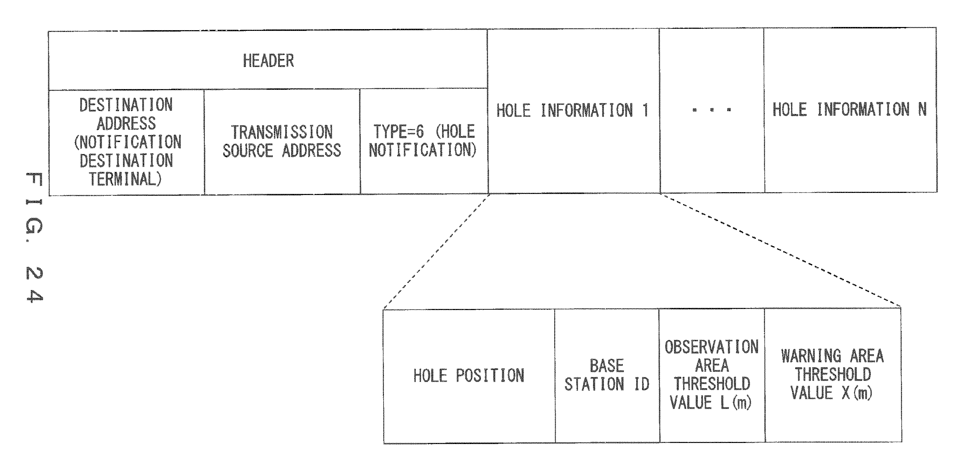

Fig. 23 is a sequence diagram illustrating an example of a process performed after it is determined that a coverage hole cannot be reduced in the fourth embodiment. Operations performed from starting of communication with the terminal apparatus 10 to detection of the coverage hole 1 which cannot be improved are the same as the procedures (1) to (12) described in the first embodiment.
(41) If a reduction possibility of the coverage hole 1a is set to "(No", the hole notification unit 64 transmits a hole notification to the application server 160.
(42) When the hole notification is received, the hole notification processing unit 164 of the application server 160 acquires a position of the coverage hole 1, the observation area threshold value (L), the warning area threshold value (X), and an identifier of the base station 20. In addition, the hole notification processing unit 164 stores the acquired information. The message generation unit 166 generates a message for notifying information on all coverage holes 1 stored in the hole notification processing unit 164. A destination of the notification message generated here is each terminal whose identifier is recorded in the terminal information database 167. Fig. 24 illustrates an example of a format of the notification message generated here.
(43) The message generation unit 166 transmits the generated notification message to the terminal apparatus 10 which is a destination.
(44) The terminal apparatus 10 which has received the notification message checks whether or not there is a coverage hole 1 correlated with the same identifier as an identifier of the base station 20 which is a connection destination of the terminal apparatus 10. Hereinafter, the coverage hole 1 which is correlated with the same identifier as the identifier of the base station 20 which is a connection destination of the terminal apparatus 10 is referred to as a "processing target coverage hole 1". In a case where the processing target coverage hole 1 is detected, the position detection unit 17 increases a frequency of detecting a position of the terminal apparatus 10. The calculation unit 15 calculates a distance from a position of the processing target coverage hole 1 to the present location on the basis of information obtained from the position detection unit 17. Next, the warning unit 16 compares a calculation result from the calculation unit 15 with the warning area threshold value X. If the distance from the processing target coverage hole 1 to the present location is equal to or smaller than the warning area threshold value X, the warning unit 16 displays information for warning of coming close to the coverage hole 1, on the display 101. If the distance from the processing target coverage hole 1 to the present location is larger than the warning area threshold value X, the warning unit 16 compares the distance from the coverage hole 1 to the present location with the observation area threshold value L. If the distance from the processing target coverage hole 1 to the present location is larger than the observation area threshold value L, the position detection unit 17 decreases a frequency of acquiring positional information.

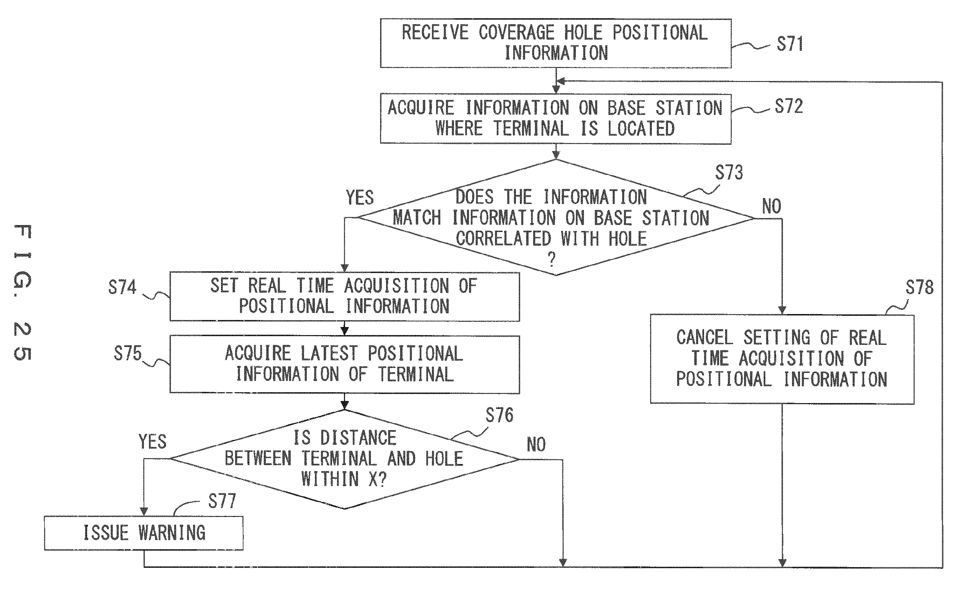

Fig. 25 is a flowchart illustrating an example of an operation of a terminal apparatus which has been notified of a position of a coverage hole. When a notification message is received, the terminal apparatus 10 acquires an identifier of the base station 20 which forms a communication area where the terminal apparatus 10 is located (steps S71 and S72). If the identifier acquired in step S72 matches an identifier of the base station 20 correlated with the coverage hole 1, the position detection unit 17 starts acquiring positional information in real time (Yes in step S73, and step S74). Processes in steps S74 to S77 are the same as the processes in steps S2 to S5 described with reference to Fig. 10. The processes in step S72 and the subsequent steps are repeatedly performed in a case where a determination result in step S76 is negative (No), or a case where the process in step S77 is completed. On the other hand, if a processing target coverage hole 1 is not found in step S73, the position detection unit 17 changes setting so that positional information is not acquired in real time (No in step S73, and step S78).

### <Others>

In addition, an embodiment is not limited to the above-described embodiments, and may be variously modified. For example, the above-described frame format is only an example, and may be changed in accordance with implementations. Further, the information elements included in a database may be changed in accordance with implementations.

In addition, the observation area threshold value L and the warning area threshold value X may be stored in advance in an individual apparatus such as the terminal apparatus 10, the base station 90, and the MME 30. In this case, the observation area threshold value L or the warning area threshold value X is not transmitted and received between the apparatuses.

There is a case where the RLF processing unit 61 is modified so as to determine that the coverage hole 1 is detected when the number of times of receiving RLF notifications as to locations included in a specific range from a certain location exceeds a predetermined value which is stored in advance.

Further, the methods according to the embodiments may also be applied to systems employing communication methods other than LTE.

Therefore, by applying the embodiments, a user can easily avoid a coverage hole on the basis of hole information received by a terminal so that communication can be performed.

### Reference Signs List

- 1: COVERAGE HOLE
- 10: TERMINAL APPARATUS
- 11, 21: WIRELESS TRANSMISSION PORTION
- 12, 22: WIRELESS RECEPTION PORTION
- 13, 23: WIRELESS UNIT
- 14: RLF GENERATION UNIT
- 15: CALCULATION UNIT
- 16: WARNING UNIT
- 17: POSITION DETECTION UNIT
- 18: POSITIONAL INFORMATION GENERATION UNIT
- 20, 90: BASE STATION
- 24: PARAMETER ACQUISITION UNIT
- 25: TILT ANGLE ADJUSTMENT UNIT
- 26, 31, 41, 51, 81, 161: TRANSMISSION UNIT
- 27, 32, 42, 52, 82, 162: RECEPTION UNIT
- 28, 33, 43, 53, 83, 163: INTERFACE
- 30: MME
- 34: TERMINAL MANAGEMENT UNIT
- 35, 167: TERMINAL INFORMATION DATABASE
- 37, 91, 164: HOLE NOTIFICATION PROCESSING UNIT
- 38, 72, 93, 166: MESSAGE GENERATION UNIT
- 40: EM
- 44: PACKET PROCESSING UNIT
- 50, 55: MDT MANAGEMENT SERVER
- 54: HOLE INFORMATION DATABASE
- 60: HOLE CONTROL UNIT
- 61: RLF PROCESSING PORTION
- 62: PARAMETER CHANGING PORTION
- 63: HOLE DETERMINATION PORTION
- 64: HOLE NOTIFICATION UNIT
- 70: NOTIFICATION UNIT
- 71, 92: TERMINAL DETERMINATION PORTION
- 80: POSITIONAL INFORMATION SERVER
- 84: POSITIONAL INFORMATION DATABASE
- 85: TERMINAL RETRIEVAL UNIT
- 86: POSITIONAL INFORMATION UPDATE UNIT
- 94: TERMINAL DATABASE
- 101: DISPLAY
- 102, 113, 121, 131, 141, 151: CPU
- 103, 122, 132, 142, 152: HDD
- 104, 114: MEMORY
- 105, 112: DSP
- 106, 111: WIRELESS RF CIRCUIT
- 115, 123, 133, 143, 153: INTERFACE
- 160: APPLICATION SERVER
- 165: DOWNLOAD REQUEST PROCESSING UNIT
- 341: TERMINAL-IN-AREA MANAGEMENT PORTION
- 342: TAU PROCESSING PORTION
- 343: INITIAL ATTACHMENT PROCESSING PORTION

## Claims

1. A communication method comprising:
specifying , by a communication apparatus, a position of a coverage hole which is a region where the terminal dose not receive a radio wave with an intensity which allows communication to be performed, the communication apparatus being included in a wired network in which a terminal performs communication via a base station;
determining a hole proximity terminal which has a possibility of coming close to the coverage hole; and
transmitting to the hole proximity terminal a notification message for notifying of hole information which is information to specify a position of the coverage hole.

2. The communication method according to claim 1,
receiving a suspended position notification for notifying a position where communication with the base station is suspended from a terminal which restarts communication after the communication with the base station is suspended due to a weak intensity of a radio wave received from the base station;
setting a position specified by the suspended position notification as the position of the coverage hole;
transmitting a control message for controlling a parameter used in the base station for reducing the coverage hole; and
transmitting the notification message to the hole proximity terminal when the coverage hole is not reduced by controlling the parameter in the base station.

3. The communication method according to claim 1 or 2,
wherein the notification message includes a position of the coverage hole and a warning area threshold value, and
wherein the hole proximity terminal displays an indication for giving a warning of being located around a region where communication is not performed to a user of the hole proximity terminal on a display provided in the hole proximity terminal, when a distance from the position of the coverage hole to the hole proximity terminal is equal to or smaller than the warning area threshold value.

4. The communication method according to any one of claims 1 to 3,
wherein the wired network includes a positional information server which holds a position of a terminal which communicates with the wired network,
wherein the communication apparatus notifies the positional information server of an observation area threshold value for determining an observation area which is a target for observing a distance from the coverage hole, and inquires the positional information server about a terminal whose distance from the coverage hole is equal to or smaller than the observation area threshold value, and
wherein the communication apparatus sets a terminal notified from the positional information server as the hole proximity terminal.

5. The method according to any one of claims 1 to 3,
wherein the wired network includes a control apparatus which manages a movement of a terminal,
wherein the communication apparatus notifies the control apparatus of a position of the coverage hole when the coverage hole is located in a communication area of the control apparatus, and
wherein the control apparatus transmits the notification message to a terminal located in the communication area as the hole proximity terminal via a connected base station.

6. The method according to any one of claims 1 to 3, wherein the wired network includes the base station, wherein the communication apparatus notifies the base station of a position of the coverage hole when the coverage hole is located in a communication area of the base station, and
wherein the base station transmits the notification message to a terminal located in the communication area as the hole proximity terminal.

7. The communication method according to any one of claims 4 to 6,
wherein the notification message includes a position of the coverage hole and an observation area threshold value which is greater than the warning area threshold value, and
wherein the hole proximity terminal decreases a frequency of obtaining a distance from the position of the coverage hole to the hole proximity terminal when the distance from the position of the coverage hole to the hole proximity terminal exceeds the observation area threshold value.

8. A communication terminal comprising:
a reception unit that receives hole information indicating a position of a coverage hole which is a region where a terminal does not receive a radio wave with an intensity which allows communication to be performed, and notification information for notifying a warning area threshold value;
a calculation unit that calculates a distance from a present location to a position of the coverage hole when the notification information is received; and
a warning unit that performs a process for giving a warning of being located around a region where communication is not performed to a user of the hole proximity notification, when a distance calculated by the calculation unit is equal to or smaller than the warning area threshold value.

9. The communication terminal according to claim 8,
wherein the notification information further includes an observation area threshold value which is greater than the warning area threshold value, and
wherein, when the distance calculated by the calculation unit exceeds the observation area threshold value, the calculation unit decreases a frequency of calculating a distance from a present location of the communication terminal to the coverage hole until the reception unit receives the notification information again.

10. A base station apparatus which performs wireless communication with a terminal and also performs communication with a communication apparatus connected thereto via a wired network, the base station apparatus comprising:
a reception unit that receives information for specifying a position of a coverage hole which is a region where the terminal does not receive a radio wave with an intensity which allows communication to be performed, from the communication apparatus;
a specifying unit that specifies a terminal connected to the base station apparatus, a terminal which requests new connection to the base station apparatus, and a terminal which is handed over to the base station;
a message generation unit that generates a notification message for notifying hole information to specify a position of the coverage hole; and
a transmission unit that transmits the notification message to a terminal specified by the specifying unit.

11. The base station apparatus according to claim 10,
wherein, when a transmission destination of the notification message is a terminal which is handed over to the base station apparatus, the message generation unit includes a position of the coverage hole in a signaling message for responding to a handover request, and
wherein, when a transmission destination of the notification message is a terminal which requests new connection to the base station apparatus, the message generation unit includes a position of the coverage hole in a signaling message for responding to a connection request.

12. A control apparatus which manages a movement of a terminal, comprising:
a reception unit that receives information for specifying a position of a coverage hole which is a region where the terminal does not receive a radio wave with an intensity which allows communication to be performed, from a communication apparatus which is connected thereto via a wired network;
a terminal management unit that specifies a terminal connected to the control apparatus, a terminal which sends a request for initial attachment to the control apparatus, and a terminal which updates a tracking area of the control apparatus;
a message generation unit that generates a notification message for notifying hole information to specify a position of the coverage hole; and
a transmission unit that transmits the notification message to a terminal specified by the terminal management unit.

13. The control apparatus according to claim 12,
wherein the message generation unit includes, in the notification message, a position of the coverage hole, and a warning area threshold value which is a distance between a terminal and the coverage hole at the time of starting a process for giving a warning that the terminal is located around the coverage hole to a user of the terminal which is a transmission destination of the notification message.

14. A server apparatus which provides an application, comprising:
a reception unit that receives information for specifying a position of a coverage hole which is a region where a terminal does not receive a radio wave with an intensity which allows communication to be performed, from a communication apparatus which is connected thereto via a wired network;
a terminal information database that records information for identifying a terminal which is provided with the application;
a message generation unit that generates a notification message for notifying hole information to specify a position of the coverage hole; and
a transmission unit that transmits the notification message to a terminal which is recorded in the terminal information database.
